# FASCICULE DE BREVET EUROPEEN

(11) **EP 3 470 890 B1**
(45) Date de publication et mention de la délivrance du brevet: **16.11.2022**
(21) Numéro de dépôt: 18200019.0
(22) Date de dépôt: 12.10.2018
(51) Int. Cl.: G01V 8/00, G01S 13/88

(54) **DISPOSITIF ET PROCÉDÉ DE DÉTECTION D'OBJETS OU MATIÈRES NON AUTORISÉS PORTÉS PAR UN INDIVIDU DANS UNE ZONE À ACCÈS PROTÉGÉ**
VORRICHTUNG UND VERFAHREN ZUR DETEKTION VON NICHT ERLAUBTEN GEGENSTÄNDEN ODER SUBSTANZEN, DIE VON EINER PERSON IN EINE ZONE MIT GESCHÜTZTEM ZUGANG GEBRACHT WERDEN
DEVICE AND METHOD FOR DETECTING UNAUTHORISED OBJECTS OR MATERIALS CARRIED BY AN INDIVIDUAL IN AN ACCESS-PROTECTED AREA

(30) Priorité: 13.10.2017 FR 1759612
(43) Date de publication de la demande: 17.04.2019
(73) Titulaire: Manneschi, Alessandro, 52100 Arezzo (IT)
(72) Inventeur: Manneschi, Alessandro, 52100 Arezzo (IT)
(74) Mandataire: Regimbeau

(56) Documents cités:
- EP-A2- 1 750 149
- WO-A2-03/069320
- US-A1- 2006 202 823
- US-A1- 2007 030 141
- US-A1- 2015 084 645

## Description

### DOMAINE DE L'INVENTION

La présente invention concerne le domaine des détecteurs conçus pour la détection d'objets ou matières non autorisés dans une zone à accès protégé.

### ARRIERE-PLAN TECHNOLOGIQUE

Il apparaît aujourd'hui nécessaire de contrôler avec une grande fiabilité les tentatives d'introduction ou de sortie de certains produits, par exemple mais non exclusivement des matières explosives, dans ou hors d'une zone sensible.

Le problème ainsi posé couvre un très large éventail de situations, qui englobe notamment et non limitativement la tentative d'introduction de produits dans une zone protégée, tel qu'un magasin, une école, une gare, un organisme public voir privé, ou la tentative de sortie de produits hors d'un périmètre défini, par exemple en cas de vol dans une entreprise ou sur un site protégé.

L'on a notamment proposé depuis de nombreuses années des portiques détecteurs de métaux à base de bobinages inductifs. La structure générale et le fonctionnement général de ces dispositifs sont bien connus de l'homme de l'art. Pour l'essentiel, des bobinages émetteurs génèrent un champ magnétique et des bobinages récepteurs détectent les perturbations de ce champ dues à des objets métalliques portés par un individu qui transite par le portique. On trouvera des exemples de tels portiques détecteurs de métaux dans les documents EP 1 750 149, EP 1 750 147 et EP 1 892 542.

Depuis plusieurs années, des scanners corporels (généralement désignés par leur terminologie anglosaxonne « body scanner ») ont été développés afin de détecter des armes, des explosifs, etc. cachés sous les vêtements d'individus pénétrant dans une zone protégée. Tous ces systèmes utilisent des technologies basées sur la détection d'énergies de rayonnement modulées ou émises par le corps des individus inspectés. Les énergies de rayonnement ainsi utilisées comprennent les rayons X, les microondes, les ondes millimétriques, la lumière infrarouge, les ondes térahertz et les ultrasons.

Un exemple de body scanner est décrit dans les documents US 2006/202823 et EP 2 202 700.

Malgré l'utilisation de plusieurs types d'énergies de rayonnement et de géométries d'imagerie, de nombreux body scanners ont pour principe la création d'une image électronique de l'individu sur laquelle les vêtements de l'individu sont transparents. Cette image est ensuite affichée sur un écran et visualisée par un opérateur afin que celui-ci détermine si l'individu porte un objet cible. Pour cela, l'opérateur, qui est formé à la détection d'objets cibles, doit être capable de déterminer si les objets identifiés par le body scanner correspondent à l'anatomie humaine, à un objet autorisé tel qu'un briquet, un mouchoir ou encore des pièces, ou à un objet cible tel qu'une arme ou un explosif.

Le demandeur a également proposé des dispositifs destinés à inspecter les chaussures et la partie inférieure des jambes d'individus, qui comprennent un bâti qui comporte une embase support formée d'un plateau rectangulaire en forme de marche dont la surface supérieure plane comporte un dessin ou empreinte et une butée destinés à accueillir et positionner un pied unique d'un individu revêtu d'une chaussure, deux panneaux latéraux symétriques qui logent des moyens de détection, et un module d'informations.

On trouvera des exemples de ce dispositif dans les documents FR 2860631, EP 1574879, FR 2889338 et FR 2911212.

Les moyens de détection décrits dans les documents mentionnés peuvent être formés de bobinages pour la détection de métaux, de moyens de prélèvement, par exemple sous forme de buses d'aspiration, pour le prélèvement de vapeurs ou de traces de particules, par exemple de stupéfiants ou d'explosifs, de moyens d'analyse à base de résonance magnétique nucléaire comprenant par exemple des bobines d'Helmholtz, ou encore des moyens d'analyse d'impédances complexes ou des détecteurs de radiations radioactives.

Tous ces dispositifs connus ont déjà rendu de grands services.

Cependant il s'avère aujourd'hui nécessaire de permettre des détections encore plus précises.

En particulier il se pose aujourd'hui le problème du contrôle des accès aux lieux grand public, comme les stades et les grands théâtres, ou le débit d'entrée doit être de plusieurs centaines de personnes/heure (jusqu'à 1000 personnes/heure). Le fonctionnement des Body scanner demande le stationnement pour plusieurs secondes de chaque personne pour permettre la lecture par les transducteurs micro-ondes et pour l'analyse des signaux obtenus par la mesure. Le débit que l'on peut ainsi obtenir, bien que acceptable par exemple pour un contrôle aéroportuaire, est très faible et totalement insuffisant pour les applications grand public.

### RESUME DE L'INVENTION

Un objectif de l'invention est donc de proposer de nouveaux moyens de détection permettant d'améliorer la détection d'objets cibles susceptibles d'être portés par un individu.

Un objectif de l'invention est en particulier de proposer des moyens de détection qui soient efficaces quel que soit le lieu de fixation d'un objet frauduleux sur un individu, plus précisément que ce soit sur l'avant du corps, l'arrière du corps, ou une partie du corps, voir une combinaison de ces dispositions.

Un autre objectif de l'invention est de proposer un système qui permet une lecture ou examen à la volée de la personne pour définir si le périmètre de son corps est libre ou s'il porte des objets métalliques et/ou diélectriques superposés.

Ces objectifs sont atteints selon l'invention grâce à un dispositif selon la revendication 1 qui comporte :
- au moins deux colonnes définissant entre elles un canal par lequel peuvent transiter des individus à contrôler,
- des bobinages répartis dans les deux colonnes, adaptés pour émettre un champ magnétique de détection et adaptés pour détecter les perturbations du champ magnétique de détection induites lors du passage d'un individu par le canal entre les deux colonnes,
- des moyens émetteurs/récepteurs micro-ondes disposés dans les deux colonnes, et
- des moyens d'analyse adaptés pour analyser les signaux issus des bobinages récepteurs pour détecter la présence d'objet métallique porté par un individu transitant par ledit canal formé entre les deux colonnes, pour analyser des signaux issus de récepteurs micro-ondes correspondant aux signaux transmis à partir d'une colonne jusqu'à la colonne en regard et aux signaux réfléchis à partir d'une colonne vers cette même colonne pour détecter la présence de matériau diélectrique porté l'individu transitant par ledit canal et pour établir les corrélations spatiales existant entre les objets métalliques et les matériaux diélectriques détectés.

Contrairement aux body scanners qui demandent le stationnement de chaque personne à contrôler, le système conforme à la présente invention, effectue une analyse qui utilise le mouvement de la personne comme « balayage spatial » de son périmètre vis-à-vis des colonnes des émetteurs et des récepteurs inductifs et à microondes, en résolvant, ainsi, la nécessité d'un grand débit.

L'invention concerne également un procédé de détection d'objets frauduleux portés par un individu selon la revendication 19 à l'aide du dispositif précité.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

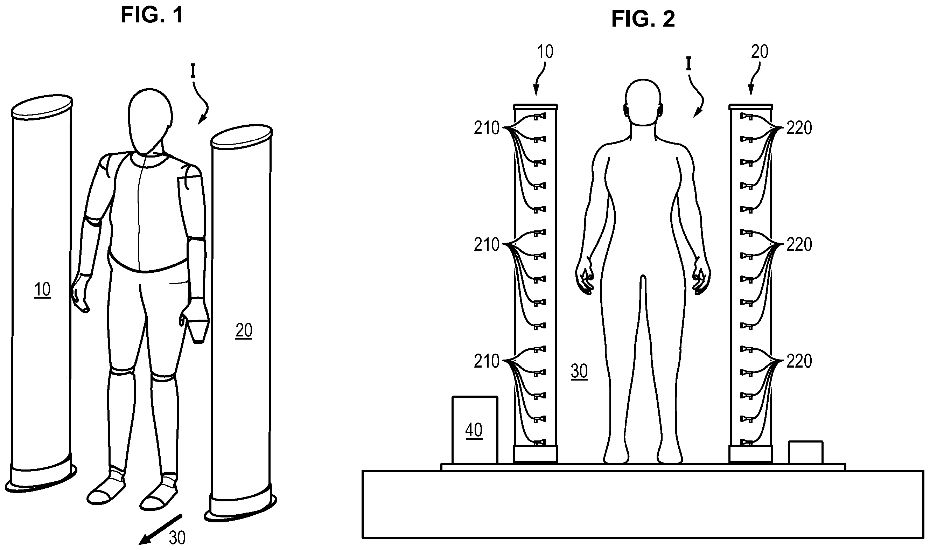

- la figure 1 représente une vue en perspective d'un dispositif conforme à la présente invention,
- la figure 2 représente le même dispositif en illustrant schématiquement le positionnement de moyens émetteurs/récepteurs micro-ondes disposés dans les deux colonnes du dispositif,

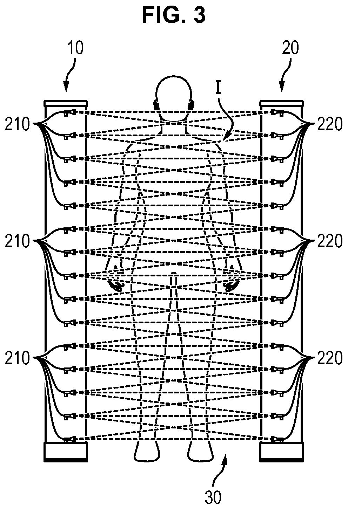

- la figure 3 représente une vue schématique en verticale de faisceaux microondes émis par le dispositif conforme à la présente invention,

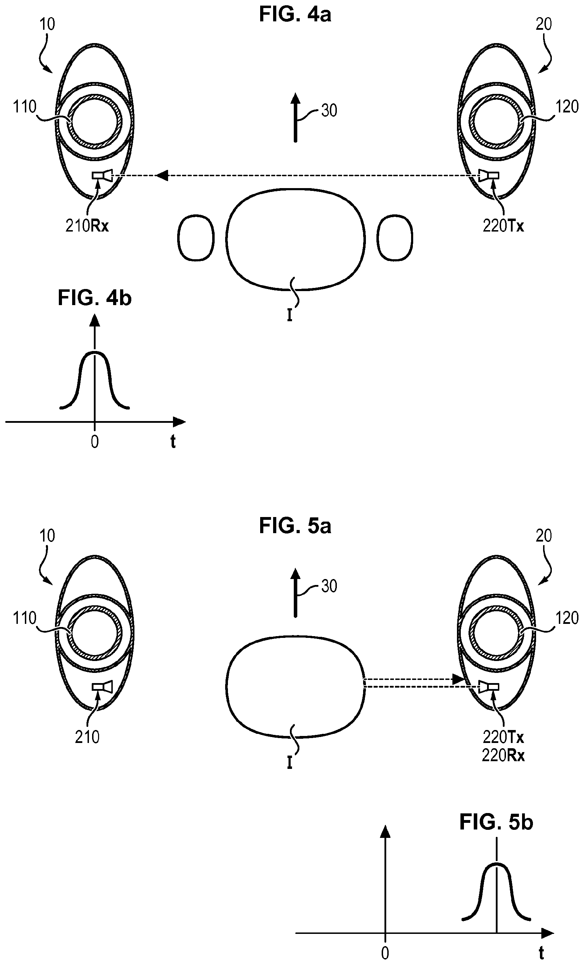

- la figure 4a représente schématiquement en vue de dessus les émissions micro-ondes à partir d'un émetteur placé sur une colonne en direction d'un récepteur placé sur la colonne en regard et la figure 4b illustre le signal reçu sur le récepteur avant qu'un individu n'intercepte le faisceau microondes,
- la figure 5a représente une vue similaire lorsqu'un individu intercepte le faisceau microondes et la figure 5b illustre le signal réfléchi vers le transducteur émetteur/récepteur,

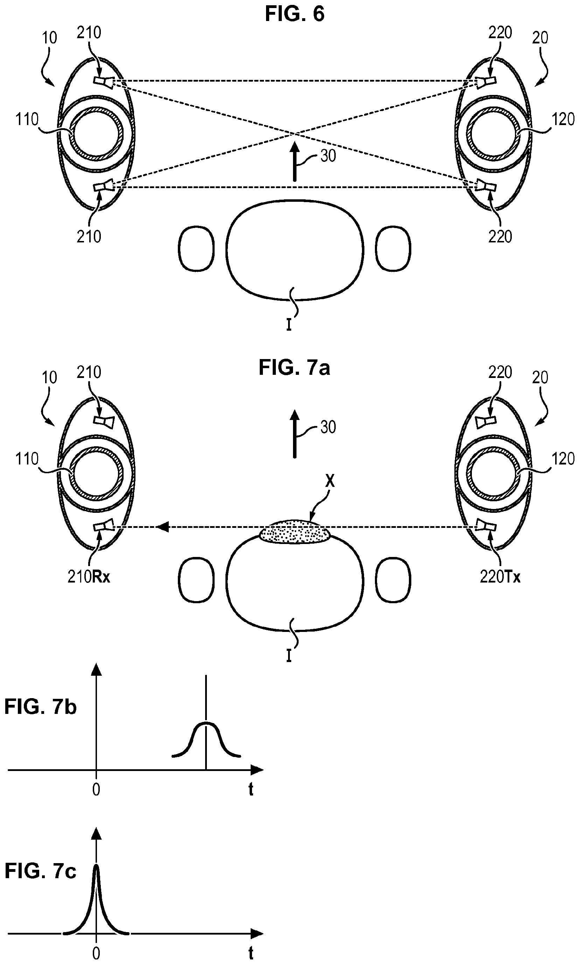

- la figure 6 représente schématiquement en vue de dessus les interactions qui peuvent exister entre les transducteurs émetteurs et les transducteurs récepteurs lorsque chaque transducteur émetteur est adapté pour émettre en direction de plusieurs transducteurs récepteurs et symétriquement chaque transducteur récepteur est adapté pour recevoir les faisceaux émis par plusieurs transducteurs émetteurs,
- la figure 7a représente schématiquement en vue de dessus les émissions/réceptions micro-ondes dans le cas d'un individu transitant par le canal et portant sur l'avant un objet frauduleux, la figure 7b représente schématiquement le signal transmis à travers cet objet caractérisé par un retard de temps et une atténuation spécifiques et la figure 7c représente le signal transmis dans l'air entre une autre paire de transducteurs micro-ondes,

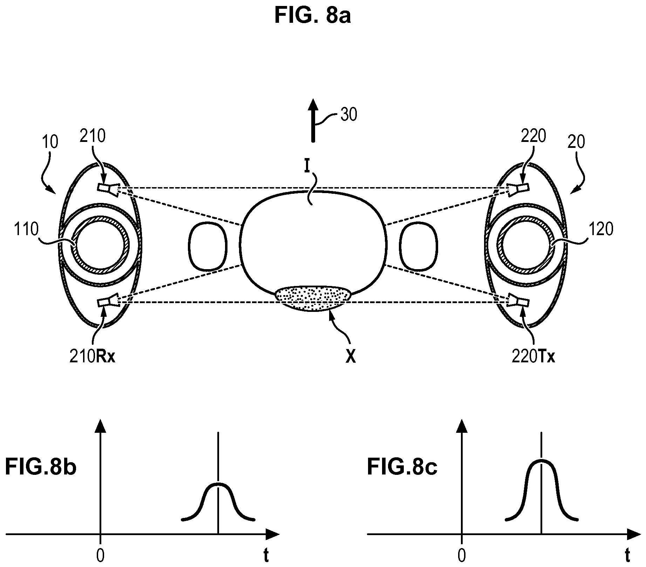

- la figure 8a représente schématiquement en vue de dessus les émissions/réceptions micro-ondes dans le cas d'un individu transitant par le canal et portant sur l'arrière un objet frauduleux, la figure 8b représente schématiquement le signal transmis à travers cet objet caractérisé par un retard de temps et une atténuation spécifiques, tandis que la figure 8c représente schématiquement le signal réfléchi sur l'individu caractérisé par un retard de temps spécifique,

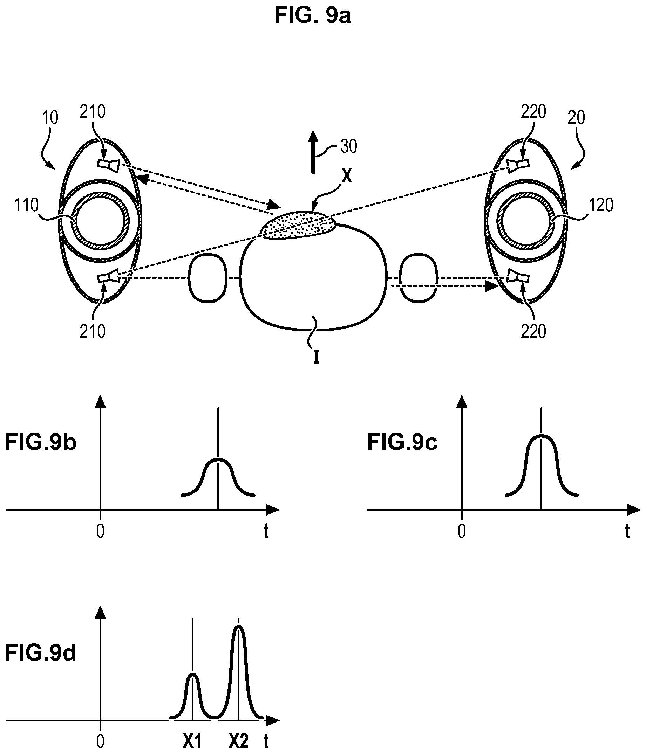

- la figure 9a représente schématiquement en vue de dessus les émissions/réceptions micro-ondes dans le cas d'un individu transitant par le canal et portant sur l'avant, mais d'un côté, un objet frauduleux et la figure 9b représente schématiquement le signal transmis à travers cet objet caractérisé par un retard de temps et une atténuation spécifiques, tandis que la figure 9c représente schématiquement le signal réfléchi sur l'individu caractérisé par un retard de temps spécifique et la figure 9d représente schématiquement un double écho réfléchi d'une part sur l'objet frauduleux et d'une autre part sur le corps de l'individu caractérisés chacun par un retard de temps et une atténuation spécifiques,

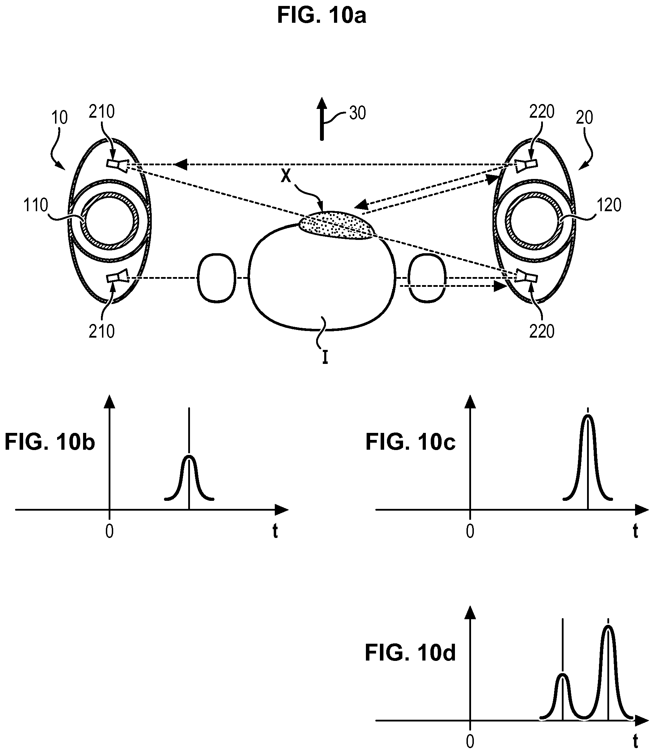

- la figure 10a représente un cas similaire à la figure 9a, l'objet frauduleux étant porté sur le côté opposé de l'individu et les figures 10b, 10c et 10d représentent respectivement le signal transmis, le signal réfléchi sur l'individu et le double écho similaires aux figures 9b, 9c et 9d,

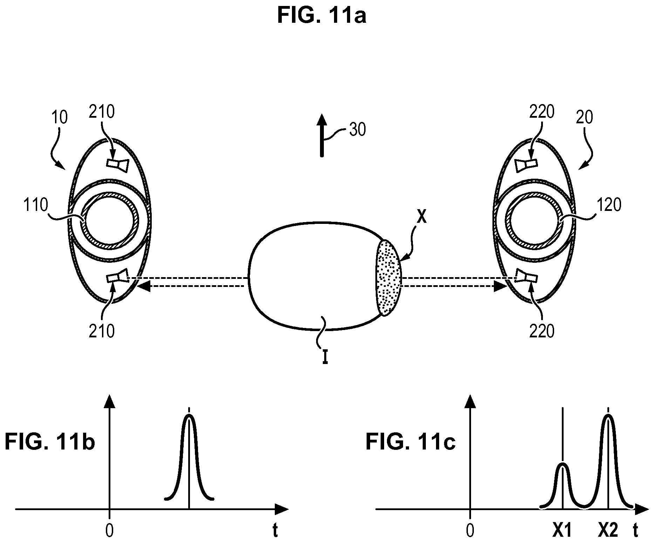

- la figure 11a représente schématiquement en vue de dessus les émissions/réceptions micro-ondes dans le cas d'un individu transitant par le canal et portant latéralement, un objet frauduleux, la figure 11b représente schématiquement le signal réfléchi sur l'individu caractérisé par un retard de temps spécifique et la figure 11c représente schématiquement un double écho réfléchi d'une part sur l'objet frauduleux et d'une autre part sur le corps de l'individu caractérisés chacun par un retard de temps et une atténuation spécifiques,

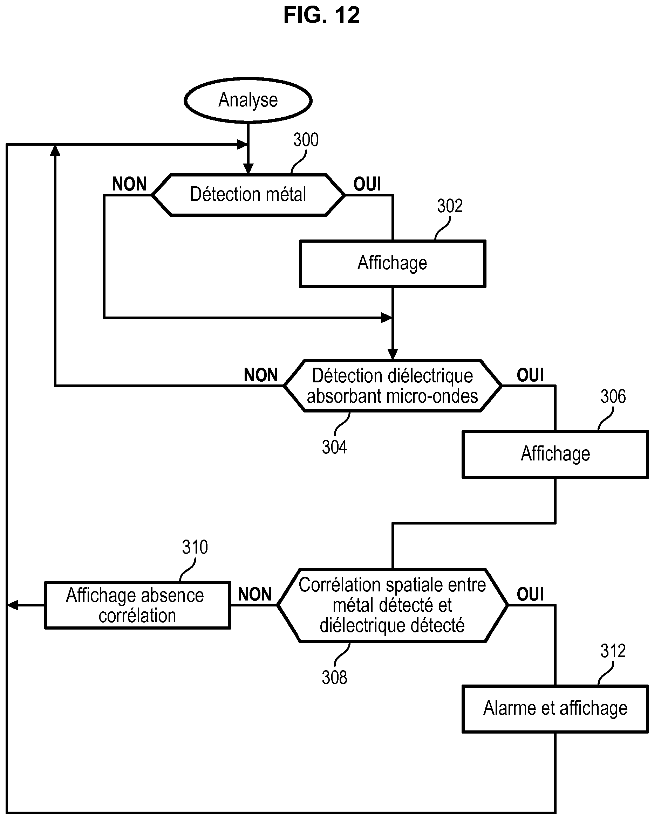

- la figure 12 représente schématiquement un organigramme d'un procédé de détermination de corrélation spatiale entre la détection d'un objet métallique à l'aide des bobinages et d'un objet diélectrique à l'aide des transducteurs micro-ondes,

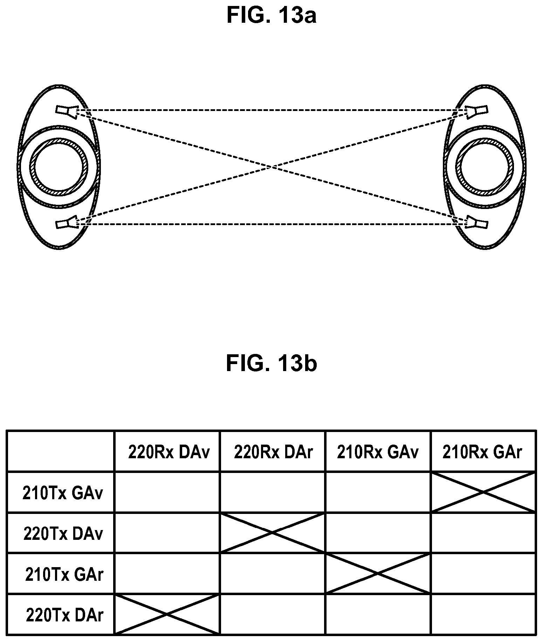

- la figure 13a représente schématiquement 4 transducteurs répartis par paires à un même niveau horizontal sur les deux colonnes, à raison d'un transducteur situé sur l'entrée et un transducteur situé sur la sortie de chaque colonne, et la figure 13b représente une matrice 4x4 des interactions possibles entre ces 4 transducteurs selon qu'ils sont successivement émetteur et/ou récepteur,

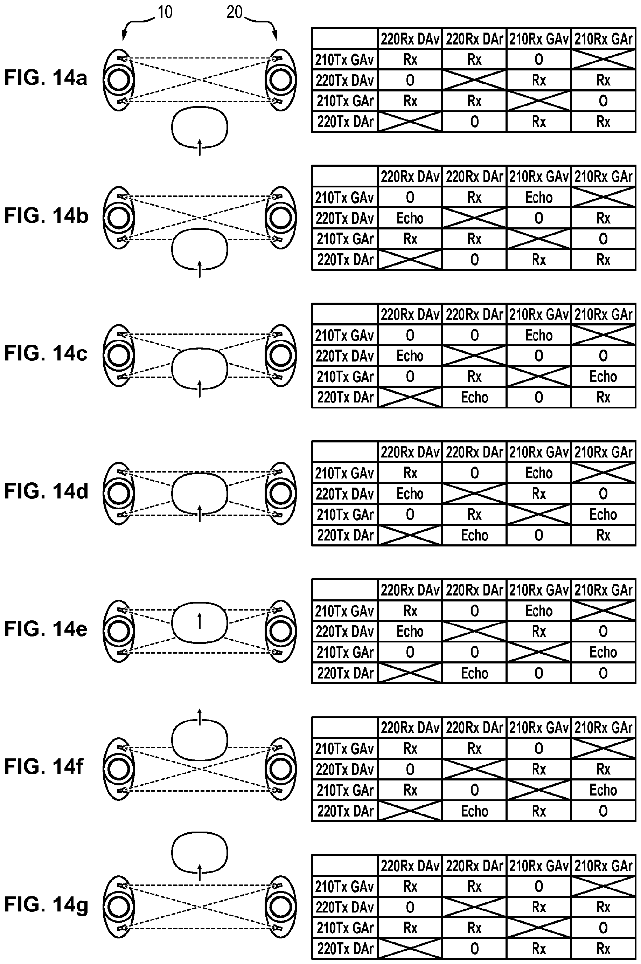

- les figures 14a à 14g représentent 7 étapes successives types de progression d'un individu dans le canal et les matrices de détection correspondantes sur les transducteurs micro-ondes récepteurs,

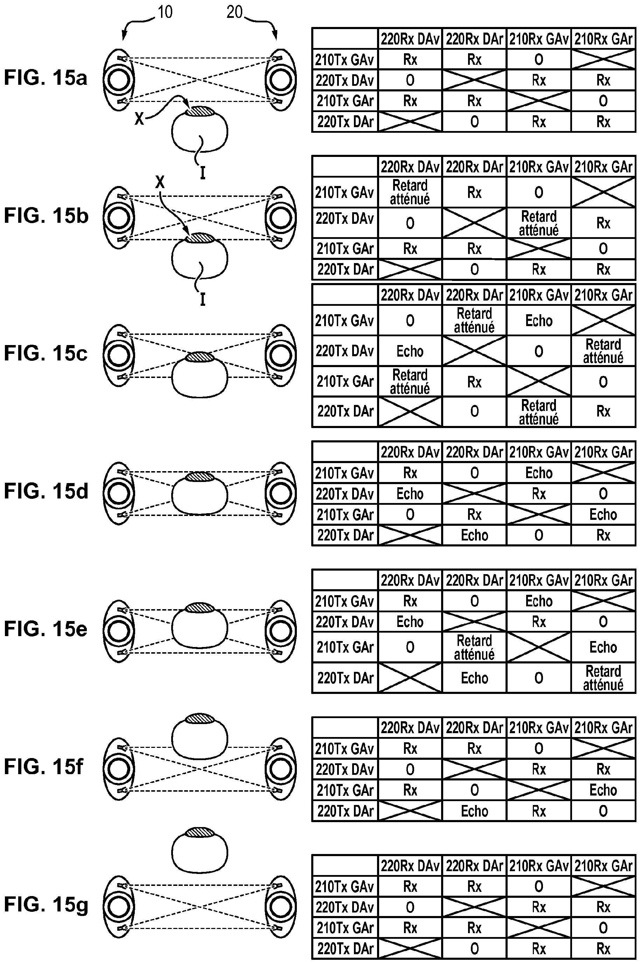

- les figures 15a à 15g représentent 7 étapes successives types de progression d'un individu dans le canal, similaires aux figures 14a à 14g, dans le cas ou l'individu porte sur l'avant de son corps un élément diélectrique frauduleux et les matrices de détection correspondantes sur les transducteurs micro-ondes récepteurs,

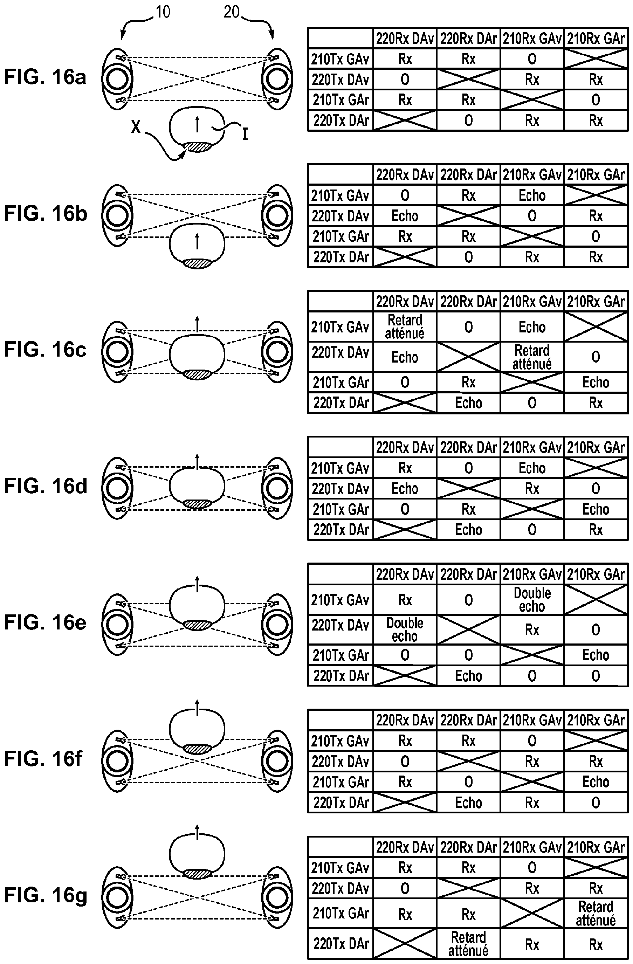

- les figures 16a à 16g représentent les étapes successives de progression d'un individu dans le canal et les matrices de détection correspondantes sur les transducteurs micro-ondes récepteurs, similaires aux figures 14a à 14g, dans le cas où l'individu porte sur l'arrière de son corps un élément diélectrique frauduleux,

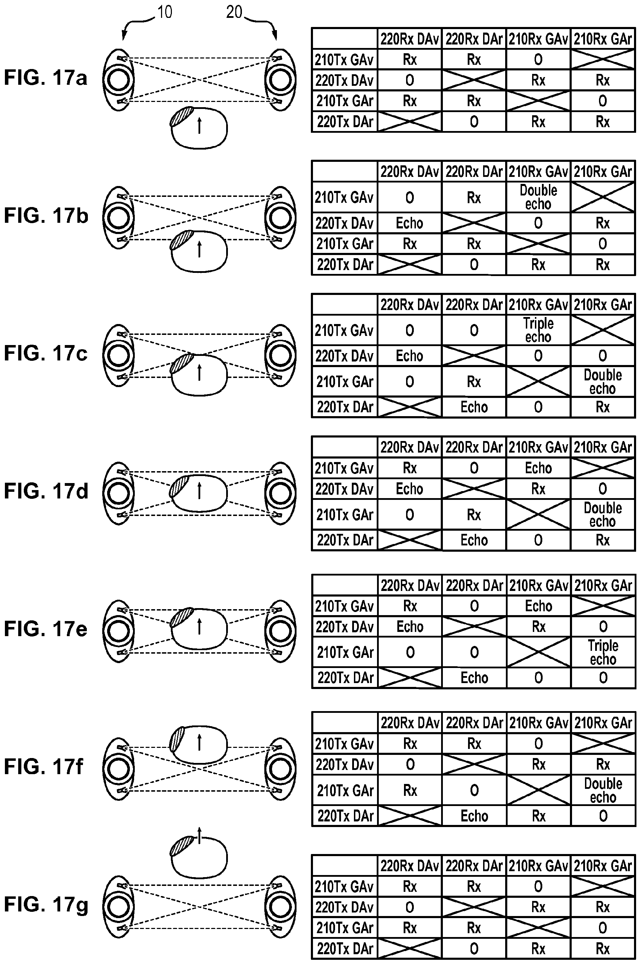

- les figures 17a à 17g représentent les étapes successives de progression d'un individu dans le canal et les matrices de détection correspondantes sur les transducteurs micro-ondes récepteurs, similaires aux figures 14a à 14g, dans le cas où l'individu porte sur l'avant de son corps et sur son côté gauche, un élément diélectrique frauduleux, et

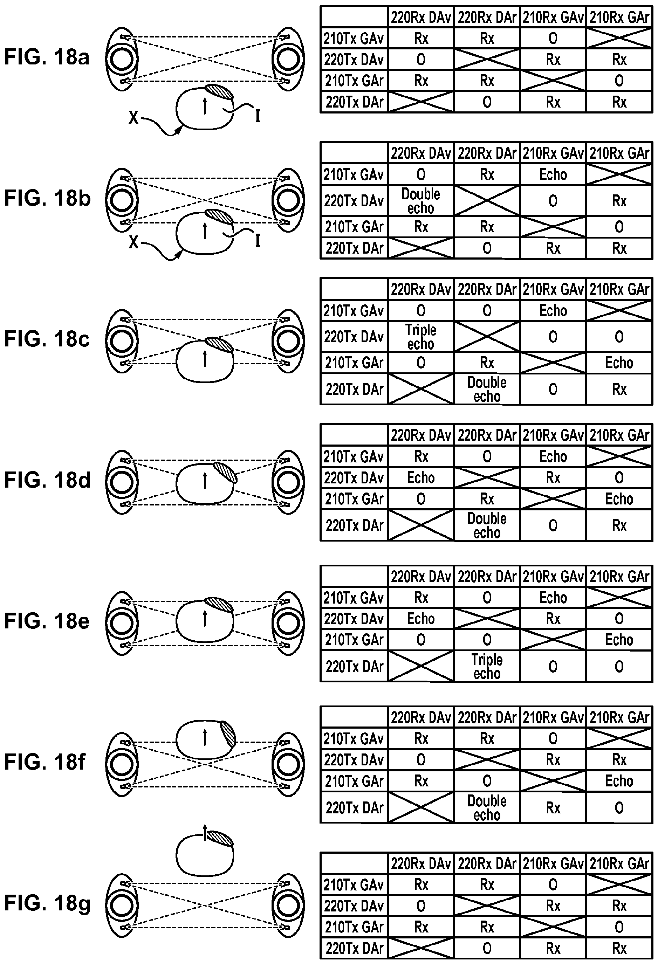

- les figures 18a à 18g représentent les étapes successives de progression d'un individu dans le canal et les matrices de détection correspondantes sur les transducteurs micro-ondes récepteurs, similaires aux figures 14a à 14g, dans le cas où l'individu porte sur l'avant de son corps et sur son côté droit, un élément diélectrique frauduleux.

### DESCRIPTION DETAILLEE D'UN MODE DE REALISATION

On a représenté sur les figures annexées, notamment sur la figure 1, un dispositif conforme à la présente invention comprenant deux colonnes 10, 20 définissant entre elles un canal 30 par lequel peuvent transiter des individus I à contrôler.

A titre d'exemple non limitatif, la hauteur des colonnes 10, 20 peut être comprise entre 150 et 200cm, avantageusement entre 150 et 180cm et l'écart entre les deux colonnes est avantageusement compris entre 70 et 100cm.

Comme indiqué précédemment le dispositif conforme à la présente invention comprend des bobinages 110 120 répartis dans les deux colonnes. Ces bobinages 110, 120 sont adaptés pour émettre un champ magnétique de détection et adaptés pour détecter les perturbations du champ magnétique de détection induites lors du passage d'un individu par le canal entre les deux colonnes.

De tels bobinages 110, 120 sont illustrés notamment sur les figures 4 à 11. Ils couvrent de préférence toute la hauteur des colonnes 10, 20.

Le dispositif conforme à la présente invention comprend également des moyens d'analyse 40 adaptés pour analyser les signaux issus des bobinages récepteurs 110Rx et 120Rx pour détecter la présence d'objet métallique porté par un individu I transitant par ledit canal 30 formé entre les deux colonnes10, 20.

Les bobinages 110, 120 peuvent faire l'objet de nombreux modes de réalisation connus, tels qu'utilisés de nos jours dans des portiques classiques détecteurs de métaux. Leur fonctionnement en soi est également classique.

La structure et le fonctionnement des bobinages 110, 120 ne sera donc pas décrit dans le détail par la suite.

On notera cependant que de préférence chaque bobinage 110, 120 prévu respectivement sur les colonnes 10 et 20 peut être formé par plusieurs enroulements séparés dont la répartition relative sur la hauteur des colonnes 10 et 20 est adaptée pour optimiser la détection et est piloté par les moyens d'analyse pour émettre des champs inductifs alternatifs sur une plage de fréquences et respectivement recevoir l'ensemble de ces champs inductifs alternatifs sur ladite plage de fréquences.

Ces dispositions sont également connues en soi et ne seront donc pas décrites plus en détail par la suite.

De préférence les champs inductifs détecteurs de métal générés par les bobinages 110, 120 sont dans la gamme de fréquences comprise entre 70Hz et 30kHz,

Comme on l'a également indiqué précédemment le dispositif conforme à la présente invention comprend de plus des moyens 210, 220 formant transducteurs émetteurs/récepteurs micro-ondes disposés respectivement dans les deux colonnes 10, 20.

Par la suite ces transducteurs 210, 220 seront assortis de l'indice Tx lorsqu'ils seront émetteurs et Rx lorsqu'ils seront récepteurs.

De préférence chaque transducteur 201, 220 peut successivement et alternativement être émetteur et/ou récepteur.

Par ailleurs les moyens d'analyse 40 sont également adaptés pour analyser les signaux issus de récepteurs micro-ondes 210Rx et 220Rx.

Plus précisément comme indiqué précédemment les moyens d'analyse 40 du dispositif conforme à la présente invention sont adaptés pour analyser les signaux issus de récepteurs micro-ondes 210Rx et 220Rx correspondant aux signaux micro-ondes transmis à partir d'une colonne jusqu'à la colonne en regard et aux signaux micro-ondes réfléchis à partir d'une colonne vers cette même colonne pour détecter la présence de matériau diélectrique porté l'individu I transitant par ledit canal et pour établir les corrélations spatiales existant entre les objets métalliques et les matériaux diélectriques détectés.

On entend par « établir les corrélations spatiales entre les objets métalliques et les matériaux diélectriques détectés » que les moyens d'analyse 40 sont adaptés pour rechercher si les signaux issus de récepteurs micro-ondes 210Rx et 220Rx conduisent à détecter un éventuel objet frauduleux sur une partie du corps de l'individu I qui correspond également dans l'espace à une détection de métal issu du traitement des signaux prélevés sur les bobinages récepteurs 110 et 120.

On a illustré schématiquement sur la figure 12 les étapes principales du processus de détermination de corrélation spatiale entre un objet métallique à l'aide des bobinages 110, 120 et un objet diélectrique à l'aide des transducteurs micro-ondes 210, 220.

Les étapes 300 et 304 correspondent respectivement à la détection d'un objet métallique à l'aide des bobinages 110, 120 et d'un objet diélectrique à l'aide des transducteurs micro-ondes 210, 220. Ces étapes 300 et 304 se rebouclent sur elles-mêmes tant qu'aucune détection n'est opérée. Le cas échéant les étapes 300 et 304 peuvent être suivies d'étapes respectives d'affichage lors de la détection d'un objet métallique à l'aide des bobinages 110, 120, ou respectivement d'un objet diélectrique à l'aide des transducteurs micro-ondes 210, 220.

Lorsqu'un objet métallique est détecté à l'étape 300 et qu'un objet diélectrique est détecté à l'étape 304, l'étape 308 de recherche de corrélation spatiale entre l'objet métallique et l'objet diélectrique est opéré par les moyens d'analyse 40. C'est-à-dire que les moyens d'analyse recherchent si l'objet métallique et l'objet diélectrique sont détectés sur la même partie du corps de l'individu qui passe par le canal 30.

En cas de détection d'une telle corrélation une alarme et un affichage correspondant sont opérés à l'étape 312.

Le processus est repris à l'origine après l'étape d'affichage 312.

De même le processus est repris à l'origine si l'étape 308 de recherche de corrélation spatiale ne révèle pas de corrélation.

De même on peut prévoir un affichage adapté à l'étape 310 lors de la détection séparément d'un objet métallique et d'un objet diélectrique, sans corrélation spatiale entre ces deux objets.

Une telle corrélation entre matériau diélectrique et métal permet d'aider le personnel qui contrôle l'accès par le dispositif à préciser un diagnostic sur la nature de l'objet frauduleux porté par l'individu et permet d'adapter en conséquence la nature des opérations à engager.

Le dispositif conforme à la présente invention comprend également des moyens d'affichage adaptés pour afficher les alarmes détectées.

Ces moyens d'affichage sont de préférence adaptés pour afficher la hauteur et le côté droit ou gauche du canal sur lequel un objet métallique et un objet diélectrique sont détectés en corrélation.

Plus précisément encore les moyens d'affichage conformes à la présente invention sont de préférence adaptés pour afficher une silhouette type avant et arrière de l'individu passant dans le canal, dimensionnée en taille sur la base d'une mesure effectuée par détection de réflexion de faisceaux micro-ondes, avec positionnement et indication de la nature des objets métalliques et des objets diélectriques non métalliques détectés.

Les transducteurs émetteurs/récepteurs micro-ondes 210, 220 comprennent de préférence plusieurs transducteurs micro-ondes répartis verticalement sur chaque colonne 10, 20. Comme représenté sur la figure 2 il peut ainsi être prévu 15 transducteurs superposés verticalement avec un écart de l'ordre de 2 à 10cm entre deux transducteurs adjacents.

De préférence, chaque transducteur micro-onde 210, 220 est associé à un cornet de focalisation adapté pour contrôler l'ouverture angulaire du cône d'émission de chaque transducteur de sorte que l'ensemble des transducteurs 210, 220 constitue un rideau vertical continu ou au moins continu. De préférence la répartition verticale des transducteurs 210, 220 et leur lobe d'émission et de réception sont déterminés de sorte les faisceaux micro-ondes constitue un rideau continu au moins dans le plan médian longitudinal du canal 30.

Les transducteurs 210, 220 opèrent de préférence dans une gamme de fréquences comprises entre 5 et 90 GHz, avantageusement entre 10 GHz et 30GHz et très préférentiellement entre 12 et 20GHz.

Les différents transducteurs 210, 220 situés sur une colonne 10 ou 20, par exemple les quinze transducteurs répartis verticalement, sont situés respectivement coaxialement à un transducteur 220, 210 situé en regard sur la colonne 20, 10 opposée.

Chaque transducteur 210, 220 peut sous le contrôle des moyens d'analyse 40 travailler alternativement en émetteur (soit 210Tx, 220Tx) ou en récepteur (soit 210Tx, 220Tx) ou en émetteur et récepteur.

Comme illustré sur la figure 3, chaque émetteur 210Tx, 220Tx est de préférence adapté pour émettre en direction d'un récepteur 220Rx, 210Rx coaxial sur la colonne opposée, ainsi qu'en direction des transducteurs adjacents à ce transducteur coaxial opposé, c'est-à-dire en direction du transducteur immédiatement supérieur et du transducteur immédiatement inférieur.

De même, comme illustré également sur la figure 3, chaque récepteur 210Rx, 220Rx est de préférence adapté pour recevoir à partir d'un émetteur 220Tx, 210Tx coaxial situé sur la colonne opposée, ainsi qu'à partir des transducteurs adjacents à ce transducteur émetteur coaxial opposé c'est-à-dire à partir du transducteur immédiatement supérieur et du transducteur immédiatement inférieur.

Comme on le voit sur la figure 4a, dans le cadre de la présente invention, chaque colonne 10, 20 peut comprendre une seule série verticale de transducteurs micro-ondes 210, 220, par exemple sur le côté entrée du canal 30. Selon la figure 4a, les bobinages 110, 120 utilisés pour la détection des métaux sont situés au centre des colonnes 10, 20.

Cependant comme on l'a illustré sur les figures 6 à 11, chaque colonne 10, 20 peut comprendre plusieurs séries verticales de transducteurs micro-ondes 210, 220. Selon les figures 6 à 11 annexées qui correspondent à une illustration non limitative, il est ainsi prévu des bobinages 110, 120 utilisés pour la détection des métaux au centre de chaque colonne 10, 20 et une série de transducteurs micro-ondes 210, 220 respectivement sur le côté entrée et sur le côté sortie des bobinages 110, 120, sur chaque colonne 10, 20.

La distance horizontale entre deux transducteurs 210, 220 situés dans une même colonne est typiquement comprise entre 10 et 30cm.

Comme on le voit sur la figure 4b, qui correspond à la situation illustrée sur la figure 4a d'un individu I qui s'apprête à entrer dans le canal 30, lorsque aucun objet ou individu n'est intercalé entre un transducteur émetteur 220Tx et un transducteur récepteur 210Rx, le transducteur récepteur 210Rx reçoit un signal avec seulement un léger retard dû à la transmission dans l'air, sans atténuation notable en amplitude.

En revanche comme on le voit sur la figure 5b qui correspond à la situation illustrée sur la figure 5a d'un individu qui est entré dans le canal 30 et se situe entre une paire de transducteurs 210, 220, la réception sur le transducteur récepteur Rx est perturbée.

Plus précisément comme on le voit sur les figures 5, le faisceau micro-ondes émis par un émetteur 220Tx est réfléchi quasi-intégralement en direction du même transducteur 220 fonctionnant en récepteur 220Rx, en raison de la densité en eau du corps de l'individu I, avec un retard égal à 2^{∗}d/c, d représentant la distance entre l'émetteur 220Tx et le corps de l'individu I et c représentant la célérité des micro-ondes dans l'air.

Le dispositif conforme à la présente invention permet ainsi par exploitation des réflexions détectées de déterminer la taille en hauteur d'un individu I qui transite par le canal 30.

Les figures 7 illustrent le fonctionnement du dispositif conforme à la présente invention dans le cas où l'individu I qui transite par le canal 30 porte un objet frauduleux X composé d'une substance non perméable aux micro-ondes sur l'avant de son corps.

Dans ce cas le faisceau micro-onde émis par un transducteur émetteur 220Tx en direction d'un transducteur récepteur 210 Rx opposé est transmis au récepteur 210 Rx en regard situé sur la colonne opposée avec un retard et une atténuation dû à la substance X, lorsque l'objet X intercepte le faisceau micro-ondes comme on le voit sur la figure 7b.

Sur ces figures 7 l'objet X intercepte un faisceau micro-onde émis sur l'entrée du canal.

En revanche de manière similaire à la figure 4b, l'objet X n'étant pas intercalé entre le transducteur émetteur 220Tx et le transducteur récepteur 210Rx situés sur la sortie du canal 30, ce transducteur récepteur 210Rx situé sur la sortie du canal 30 reçoit un signal avec seulement un léger retard dû à la transmission dans l'air, sans atténuation notable en amplitude, comme illustré sur la figure 7c.

Lorsque l'individu I continuera à avancer dans le couloir 30, son corps réfléchira le faisceau micro-ondes en direction du transducteur émetteur comme décrit précédemment en regard des figures 5.

Puis les paires de transducteurs 210, 220 situés en sortie du canal 30 opéreront, lorsque l'individu les atteindra, les mêmes détections que les paires de transducteurs 210, 220 situés en entrée du canal 30 ont opéré lorsque l'individu est entré dans le canal 30.

Les figures 8 illustrent le fonctionnement du dispositif conforme à la présente invention dans le cas où l'individu I qui transite par le canal 30 porte un objet frauduleux X composé d'une substance non perméable aux micro-ondes sur l'arrière de son corps.

Dans ce cas dans un premier temps les faisceaux micro-ondes émis par les transducteurs 210, 220 situés à l'entrée du canal 30 sont occultés par le corps de l'individu lorsque celui-ci intercepte les faisceaux (situation comparable aux figures 5).

Puis le faisceau micro-onde émis par un transducteur émetteur 220Tx en direction d'un transducteur récepteur 210 Rx opposé est transmis au récepteur 210 Rx en regard situé sur la colonne opposée avec un retard et une atténuation dû à la substance X, lorsque l'objet X intercepte le faisceau micro-ondes comme on le voit sur la figure 8b.

Simultanément si l'écart longitudinal entre les deux séries de transducteurs 210 et respectivement 220 est faible, son corps réfléchira le faisceau micro-ondes en direction du transducteur émetteur situé en sortie du canal 30 comme décrit précédemment en regard des figures 5. Le signal réfléchi correspondant est illustré sur la figure 8c. Il est comparable à celui de la figure 5b.

En revanche de manière similaire à la figure 4b, l'objet X n'étant pas intercalé entre le transducteur émetteur 220Tx et le transducteur récepteur 210Rx situés sur la sortie du canal 30, ce transducteur récepteur 210Rx situé sur la sortie du canal 30 reçoit encore un signal avec seulement un léger retard dû à la transmission dans l'air, sans atténuation notable en amplitude, de manière comparable à la figure 4b.

Lorsque l'individu I continuera à avancer dans le couloir 30, les paires de transducteurs 210, 220 situés en sortie du canal 30 opéreront, lorsque l'individu les atteindra, les mêmes détections que les paires de transducteurs 210, 220 situés en entrée du canal 30 ont opéré lorsque l'individu est entré dans le canal 30.

Les figures 9 illustrent le fonctionnement du dispositif conforme à la présente invention dans le cas où l'individu I qui transite par le canal 30 porte un objet frauduleux X composé d'une substance non perméable aux micro-ondes sur l'avant, mais d'un côté de son corps.

Dans ce cas dans un premier temps les faisceaux micro-ondes émis entre les transducteurs 210, 220 situés à l'entrée du canal 30 sont occultés par le corps de l'individu lorsque celui-ci intercepte ces faisceaux (situation comparable aux figures 5 ; un faisceau émis par l'émetteur 220Tx d'entrée est réfléchi vers celui-ci comme illustré sur la figure 9c avec un retard égal à 2^{∗}d/c), mais le signal émis par un transducteur émetteur 220Tx situé en sortie du canal 30 en direction d'un transducteur récepteur 210Rx situé en entrée du canal 30 sur le côté de l'objet X est transmis à ce récepteur 210 Rx avec un retard et une atténuation dû à la substance X, lorsque l'objet X intercepte le faisceau micro-ondes comme on le voit sur la figure 9b.

En revanche de manière similaire à la figure 4b, l'objet X n'étant pas intercalé entre le transducteur émetteur 220Tx et le transducteur récepteur 210Rx situés sur la sortie du canal 30, ce transducteur récepteur 210Rx situé sur la sortie du canal 30 reçoit encore du transducteur émetteur de sortie 220Tx un signal avec seulement un léger retard dû à la transmission dans l'air, sans atténuation notable en amplitude, de manière comparable à la figure 4b, tandis que le faisceau émis par un transducteur 210 situé en sortie en direction de l'objet X est réfléchi vers ce transducteur 210 opérant en récepteur de sorte que ce dernier reçoit alors deux échos successifs, avec des retards différents : un premier écho X1 dû à la réflexion sur la substance X et un deuxième écho X2 dû à la réflexion sur le corps de l'individu I, comme illustré sur la figure 9d.

Lorsque l'individu I continuera à avancer dans le couloir 30, les paires de transducteurs 210, 220 situés en sortie du canal 30 opéreront, lorsque l'individu les atteindra, les mêmes détections que les paires de transducteurs 210, 220 situés en entrée du canal 30 ont opéré lorsque l'individu est entré dans le canal 30.

Les figures 10 illustrent le fonctionnement du dispositif conforme à la présente invention dans le cas où l'individu I qui transite par le canal 30 porte un objet frauduleux X composé d'une substance non perméable aux micro-ondes sur l'avant, mais d'un côté de son corps opposé au cas des figures 9.

Le fonctionnement du dispositif est alors symétrique, par une symétrie gauche/droite à celui décrit précédemment en regard des figures 9. Ce fonctionnement ainsi que les figures 10b (réception à travers la substance X reçue avec un retard et une atténuation dû à la substance X), 10c (réflexion par le corps et réception sur le transducteur émetteur avec un retard égal à 2^{∗}d/c) et 10d (deux échos successifs, avec des retards différents : un premier écho X1 dû à la réflexion sur la substance X et un deuxième écho X2 dû à la réflexion sur le corps de l'individu I) ne seront donc pas décrits plus en détail par la suite.

Les figures 11 correspondent au cas d'un objet frauduleux X porté latéralement par un individu I.

Là encore les transducteurs 210, 220 détectent successivement soit un faisceau micro-ondes sensiblement sans retard et sans atténuation lorsque aucun objet ou corps n'est intercalé entre un transducteur émetteur et un transducteur récepteur respectivement associé, soit une réflexion avec un retard égal à 2^{∗}d/c lorsque le corps de l'individu est intercalé en regard d'un émetteur, soit deux échos comme illustré sur la figure 11c lorsque l'objet frauduleux X est placé en regard d'un émetteur avec des retards différents : un premier écho X1 dû à la réflexion sur la substance X et un deuxième écho X2 dû à la réflexion sur le corps de l'individu I.

Le pilotage des couples émetteurs/récepteurs 210, 220 et de l'analyse des signaux issus d'un récepteur Rx permet donc de détecter la présence sur un individu d'un objet X non perméable aux micro-ondes et permet de donner un diagnostic quant à la localisation de cet objet sur le corps de l'individu I.

Généralement, selon des tests réalisés par les inventeurs, le deuxième écho sur le corps a une amplitude plus importante que le premier écho sur la substance X qui n'est que partiellement réflectrice.

L'homme de l'art comprendra à la lecture de la description qui précède que l'invention permet ainsi la détection de substances frauduleuses non métalliques, par exemple d'explosifs ou de drogue, portées par un individu par détection du retard et de l'amplitude de signaux micro-ondes transmis à travers la substance et/ou réfléchi par la substance, ainsi que par le corps.

Les moyens d'analyse 40 procèdent par comparaison des signaux transmis et/ou réfléchis avec des valeurs de transmission dans l'air et/ou de signaux réfléchis sur un corps dépourvu d'objet frauduleux.

Les moyens 40 sont adaptés pour générer une alarme lorsqu'un écart significatif dépassant un seuil est détecté par rapport aux valeurs de référence.

L'homme de l'art comprendra en effet que l'analyse des séquences de signaux reçus sur les transducteurs micro-ondes 210, 220 permet de contrôler la progression d'un individu dans le canal 20, de déterminer si cet individu porte une substance diélectrique retardant les micro-ondes et de déterminer par analyse de la chronologie des séquences le lieu de port sur l'individu.

Comme indiqué précédemment la figure 13a représente schématiquement 4 transducteurs 210, 220 répartis par paires à un même niveau horizontal sur les deux colonnes, à raison d'un transducteur situé sur l'entrée et un transducteur situé sur la sortie de chaque colonne 10, 20.

Par ailleurs la figure 13b représente une matrice 4x4 des interactions possibles entre ces 4 transducteurs selon qu'ils sont successivement émetteur et/ou récepteur.

Sur la figure 13b le transducteur 210 situé à gauche et à l'entrée du canal est référencé 210TxGAv lorsqu'il est émetteur et 210RxGAv lorsqu'il est récepteur. Le transducteur 220 situé à droite et à l'entrée du canal est référencé 220TxDAv lorsqu'il est émetteur et 220RxDAv lorsqu'il est récepteur. Le transducteur 210 situé à gauche et à la sortie du canal est référencé 210TxGAr lorsqu'il est émetteur et 210RxGAr lorsqu'il est récepteur. Le transducteur 220 situé à droite et à la sortie du canal est référencé 220TxDAr lorsqu'il est émetteur et 220RxDAr lorsqu'il est récepteur.

Les figures 14a à 14g représentent 7 étapes successives types de progression d'un individu dans le canal 30 et les matrices de détection correspondantes sur les transducteurs micro-ondes récepteurs. Sur les figures 14 on a indiqué « O » lorsque le récepteur ne reçoit pas de signal, « Rx » lorsqu'il reçoit pratiquement sans retard ni atténuation le signal provenant de l'émetteur associé, et « Echo » lorsqu'il reçoit son propre signal réfléchi par le corps de l'individu I,

Les figures 15a à 15g représentent 7 étapes successives types de progression d'un individu I dans le canal 30, similaires aux figures 14a à 14g, dans le cas ou l'individu porte sur l'avant de son corps un élément diélectrique frauduleux X et les matrices de détection correspondantes sur les transducteurs micro-ondes récepteurs. Sur les figures 15 on a indiqué « O » lorsque le récepteur ne reçoit pas de signal, « Rx » lorsqu'il reçoit pratiquement sans retard ni atténuation le signal provenant de l'émetteur associé, « Echo » lorsqu'il reçoit son propre signal réfléchi par le corps de l'individu I, et « Retard Atténué » lorsqu'il reçoit un signal retardé et atténué transmis à travers le corps diélectrique frauduleux X.

Par ailleurs comme indiqué précédemment :
- les figures 16a à 16g représentent schématiquement des étapes successives de progression d'un individu dans le canal et les matrices de détection correspondantes sur les transducteurs micro-ondes récepteurs, similaires aux figures 14a à 14g, dans le cas où l'individu porte sur l'arrière de son corps un élément diélectrique frauduleux,
- les figures 17a à 17g représentent schématiquement des étapes successives de progression d'un individu dans le canal et les matrices de détection correspondantes sur les transducteurs micro-ondes récepteurs, similaires aux figures 14a à 14g, dans le cas où l'individu porte sur l'avant de son corps et sur son côté gauche, un élément diélectrique frauduleux, et
- les figures 18a à 18g représentent schématiquement les étapes successives de progression d'un individu dans le canal et les matrices de détection correspondantes sur les transducteurs micro-ondes récepteurs, similaires aux figures 14a à 14g, dans le cas où l'individu porte sur l'avant de son corps et sur son côté droit, un élément diélectrique frauduleux.

L'examen comparé de la chronologie de l'état des signaux entre les figures 14, 15, 16, 17 et 18 permet de détecter la présence de l'objet X et sa localisation sur le corps de l'individu.

Les moyens d'analyse 40 exploitent non seulement la chronologie d'évolution des signaux sur un même transducteur récepteur 210 ou 220, mais également les dissymétries entre les signaux reçus sur les transducteurs récepteurs 210 ou 220 avant et respectivement arrière, ainsi que les dissymétries entre les signaux reçus sur les transducteurs récepteurs 210 ou 220 droits et respectivement gauches.

Bien entendu le nombre de séquences prises en compte, ici 7, n'est pas limitatif et doit être adapté en fonction des dimensions relatives du canal, de la section de l'individu et de la résolution de détection souhaitée.

Par ailleurs les matrices de référence utilisées pour détecter la présence de l'objet X doivent être multipliées pour prendre en compte l'ensemble des positions possibles de l'objet sur l'individu (sur l'avant, sur l'arrière ou latéralement) sur la base des principes de fonctionnement (transmission directe, réflexion, double écho) décrit en regard des figures 4 à 11.

En pratique il est prévu plusieurs niveaux de transducteurs 210, 220 superposés verticalement, par exemple 15 niveaux de transducteurs, et chaque transducteur 210, 220 coopère lui-même non seulement avec les transducteurs du même niveau, mais également avec les transducteurs du niveau inférieur et les transducteurs du niveau supérieur. La présence de ces différents niveaux de transducteurs superposés verticalement permet de connaitre la position verticale d'un éventuel objet diélectrique détecté.

Les moyens d'analyse disposent ainsi d'un grand nombre de matrices de signaux de détection permettant une détection fine de la présence potentiel d'un matériau diélectrique retardant les micro-ondes, sur un individu, et permettant la localisation d'un tel matériau sur le corps de l'individu, c'est-à-dire à la fois sa position en hauteur sur le corps, mais aussi sa position sur une section horizontale du corps.

L'on notera que l'on a mentionné la possibilité, en regard des figures 9 à 11, de réception de double échos dus à une réflexion sur la substance X frauduleuse à détecter et à une réflexion sur le corps de l'individu I. Cependant selon la configuration et/ou le positionnement des objets X frauduleux à détecter, un transducteur récepteur 210 ou 220 peut le cas échéant recevoir plus de 2 échos comme cela est mentionné notamment sur les figures 17c, 17e, 18c et 18e, voire des échos élargis.

De préférence, dans le cadre de l'invention, les moyens 300 sont adaptés pour réaliser au moins l'une des étapes suivantes et de préférence la combinaison de l'ensemble des étapes suivantes :
- mesure du retard et de l'amplitude d'une transmission directe de micro-ondes entre chaque paire d'émetteurs 210Tx, 220TX et récepteur 210Rx, 220Rx coaxiaux situés sur les deux colonnes opposées 10, 20,
- mesure du retard et de l'amplitude d'une transmission oblique de micro-ondes entre chaque émetteur 210Tx, 220TX situé sur une colonne 10, 20 et les récepteurs 210Rx, 220Rx qui encadrent le récepteur situé sur la colonne opposée coaxial de l'émetteur,
- mesure du retard et de l'amplitude de l'onde micro-ondes émise par chaque transducteur émetteur 210Tx, 220TX et réfléchie vers le même transducteur formant récepteur 210Rx, 220Rx ou vers les récepteurs 210Rx, 220Rx encadrant ce dernier, par le corps d'un individu ou par une substance frauduleuse (non métallique) porté par cet individu,
- détection de la présence d'un double écho d'ondes micro-ondes réfléchi par une substance frauduleuse et par le corps d'un individu,
- comparaison des ondes micro-ondes transmises directement avec une valeur de référence de transmission dans le vide et transmission d'une alarme en cas de détection de retard supérieur à un seuil et avec une amplitude correspondant à une gamme de substances qui retarde et atténue les micro-ondes,
- comparaison des ondes micro-ondes transmises directement avec des micro-ondes transmises sur des transducteurs adjacents et génération d'une alarme en cas d'écart supérieur à un seuil détecté entre les différents signaux (assimilable à la présence d'une substance non métallique et non perméable aux micro-ondes),
- comparaison des ondes micro-ondes obliques avec une valeur de référence dans le vide et génération d'une alarme en cas de détection de retard supérieur à un seuil et avec une amplitude correspondant à une gamme prédéterminée représentative de substances qui retardent et atténuent les micro-ondes,
- comparaison des ondes micro-ondes transmises en oblique avec les ondes micro-ondes transmises directement adjacentes et génération d'une alarme en cas d'écart supérieur à un seuil détecté entre les différents signaux (assimilable à la présence d'une substance non métallique et non perméable aux micro-ondes),
- comparaison d'un double écho détecté avec des valeurs de transmission dans le vide et génération d'une alarme en cas de détection d'un retard supérieur à un seuil entre les pics des deux échos avec une amplitude supérieur à un seuil (représentatif d'une substance qui réfléchit une part de l'onde (premier écho) et qui retarde et atténue le signal non réfléchi (deuxième écho)),
- mesure de la hauteur du corps d'un individu passant dans le canal 30 qui correspond à une réflexion d'onde micro-onde, de préférence au niveau de chaque colonne,
- déterminer la position d'un individu passant dans le canal, entre l'entrée et la sortie du canal, par analyse des signaux issus des transducteurs récepteurs micro-ondes,
- mesure des modifications de champs inductifs dues à des substances métalliques portées par un individu passant dans le canal,
- affichage de la hauteur et du côté droit ou gauche du canal sur lequel un objet métallique et un objet diélectrique sont détectés en corrélation,
- affichage de la silhouette type avant et arrière de l'individu passant dans le canal, dimensionnée en taille sur la base d'une mesure effectuée par détection de réflexion de faisceaux micro-ondes avec positionnement et indication de la nature des objets métalliques et des objets diélectriques non métalliques détectés,
- génération des champs inductifs détecteurs de métal dans la gamme de fréquences comprise entre 70Hz et 30kHz,
- génération de faisceaux micro-ondes dans la gamme comprise entre 10 GHz et 90 GHz.

Le dispositif conforme à la présente invention qui vient d'être décrit peut être complété par des équipements auxiliaires, par exemple par des moyens de prélèvement et d'analyse de substances, vapeur ou de traces de particules et/ou par des moyens d'analyse type résonance magnétique nucléaire, des moyens d'analyse d'impédance complexe et/ou des moyens détecteurs de radiations radio-actives.

De tels moyens sont connus en soi dans leur structure générale et ne seront donc pas décrits plus en détail par la suite.

Bien entendu la présente invention n'est pas limitée aux modes de réalisation précédemment décrits, mais s'étend à toutes variantes conformes à l'invention telle que définie par les revendications annexées.

Grâce à la détection de corrélation spatiale existant entre les objets métalliques et les matériaux diélectriques détectés, la présente invention permet en particulier une détection fiable d'explosifs portés par des individus, par exemple de ceintures d'explosifs, notamment comportant en combinaison de petits objets métalliques. Elle permet également une détection fiable du contenu de mallettes portées par des individus puisque l'invention permet une détection fiable sur toute la hauteur des colonnes, jusqu'au sol.

L'homme de l'art comprendra que, contrairement aux body scanners qui demandent le stationnement de chaque personne à contrôler et requièrent donc une analyse statique, l'invention en utilisant le mouvement de la personne comme balayage spatial de son périmètre vis-à-vis des colonnes des émetteurs et des récepteurs inductifs et à micro-ondes et en procédant à la mesure du délai et de l'atténuation de l'impulsion micro-onde causée par la masse diélectrique conduit à une mesure qui procède dans une plage ou fenêtre très limitée et donc très précise.

Les faisceaux entre les antennes émettrices et réceptrices sont d'abord partiellement occultés par la masse diélectrique. Dans cette phase encore une bonne partie de l'énergie est couplée en direct, c'est-à-dire ne passe pas dans le diélectrique mais dans l'air parce qu'il y a des chemins disponibles dans l'air. Dès que la personne avance, le faisceau Tx-Rx est progressivement occulté jusqu'au point d'avoir le seul résidu d'énergie transmise passant par le diélectrique, car aucun autre chemin n'est possible. Cette position est la position idéale de mesure des propriétés diélectriques du matériel. La plage d'espace correspondant à cette condition idéale (transition de l'individu par rapport au faisceau micro-ondes) est de 1 ou 2 cm dans le déplacement de l'individu contrôlé.

Le monitorage continu des signaux micro-ondes reçus est opéré avec une fréquence d'échantillonnage ou fréquence de répétition de la mesure élevée, typiquement entre 10/seconde à 100/seconde. Cette fréquence doit être assez élevée pour réussir à effectuer au moins une mesure dans la condition optimale (faisceau quasi-totalement obscuré, avec résidu d'énergie transmis seulement par la masse diélectrique).

## Revendications

1. Dispositif destiné à la détection d'objets ou matières non autorisés portés par un individu dans une zone à accès protégé, comportant
- au moins deux colonnes (10, 20) définissant entre elles un canal (30) par lequel peuvent transiter des individus à contrôler,
- des bobinages (110, 120) répartis dans les deux colonnes (10, 20), adaptés pour émettre un champ magnétique de détection et adaptés pour détecter les perturbations du champ magnétique de détection induites lors du passage d'un individu par le canal entre les deux colonnes,
- des moyens émetteurs/récepteurs micro-ondes (210, 220) disposés dans les deux colonnes (10, 20), et **caractérisé en ce qu'**il comporte
- des moyens d'analyse (40) adaptés pour analyser les signaux issus des bobinages récepteurs (110, 120) pour détecter la présence d'objet métallique porté par un individu transitant par ledit canal formé entre les deux colonnes (10, 20), pour analyser des signaux issus de récepteurs micro-ondes (210Rx, 220Rx) correspondant aux signaux micro-ondes transmis à partir d'une colonne jusqu'à la colonne en regard et aux signaux micro-ondes réfléchis à partir d'une colonne vers cette même colonne pour détecter la présence de matériau diélectrique porté par l'individu transitant par ledit canal et pour établir les corrélations spatiales existant entre les objets métalliques et les matériaux diélectriques détectés.

2. Dispositif selon la revendication 1, dans lequel les moyens d'analyse (40) procèdent par analyse du retard et de l'amplitude des signaux micro-ondes reçus par rapport à une référence.

3. Dispositif selon l'une des revendications 1 ou 2, dans lequel les moyens d'analyse (40) procèdent par comparaison des signaux micro-ondes reçus sur un récepteur avec des signaux de référence représentatifs de la transmission dans le vide et/ou de réflexion sur un corps.

4. Dispositif selon l'une des revendications 1 à 3, dans lequel les moyens d'analyse (40) génèrent une alarme en cas de détection d'un écart supérieur à un seuil entre les signaux micro-ondes reçus et une référence.

5. Dispositif selon l'une des revendications 1 à 4, dans lequel moyens (210, 220) émetteurs/récepteurs micro-ondes comprennent plusieurs transducteurs micro-ondes répartis verticalement sur chaque colonne (10, 20).

6. Dispositif selon la revendication 5, dans lequel l'écart vertical entre deux émetteurs/récepteurs micro-ondes adjacents (210, 220) est compris entre 2 et 10cm.

7. Dispositif selon l'une des revendications 1 à 6, dans lequel les transducteurs micro-ondes (210, 220) opèrent dans une gamme de fréquences comprises entre 5 et 90GHz.

8. Dispositif selon l'une des revendications 1 à 7, dans lequel les différents transducteurs micro-ondes (210, 220) situés sur une colonne (10) sont situés respectivement coaxialement à un transducteur situé en regard sur la colonne (20) opposée.

9. Dispositif selon l'une des revendications 1 à 8, dans lequel chaque transducteur micro-ondes (210, 220) est adapté pour travailler alternativement en émetteur ou en récepteur ou en émetteur et récepteur.

10. Dispositif selon l'une des revendications 1 à 9, dans lequel chaque émetteur micro-ondes (210Tx, 220Tx) est adapté pour émettre en direction d'un récepteur micro-ondes (210Rx, 220Rx) coaxial sur la colonne opposée, ainsi qu'en direction des transducteurs adjacents à ce transducteur coaxial opposé.

11. Dispositif selon l'une des revendications 1 à 10, dans lequel chaque récepteur (210Rx, 220Rx) est adapté pour recevoir à partir d'un émetteur (210Tx, 220Tx) coaxial situé sur la colonne opposée, ainsi qu'à partir des transducteurs adjacents à ce transducteur émetteur coaxial opposé.

12. Dispositif selon l'une des revendications 1 à 11, dans lequel les moyens d'analyse (40) sont adaptés pour opérer au moins l'une des fonctions suivantes :
- mesure du retard et de l'amplitude d'une transmission directe de micro-ondes entre chaque paire d'émetteurs (210Tx, 220TX) et récepteur (210Rx, 220Rx) coaxiaux situés sur les deux colonnes opposées (10, 20),
- mesure du retard et de l'amplitude d'une transmission oblique de micro-ondes entre chaque émetteur (210Tx, 220TX) situé sur une colonne (10, 20) et les récepteurs (210Rx, 220Rx) qui encadrent le récepteur situé sur la colonne opposée coaxial de l'émetteur,
- mesure du retard et de l'amplitude de l'onde micro-ondes émise par chaque transducteur émetteur (210Tx, 220TX) et réfléchie vers le même transducteur formant récepteur (210Rx, 220Rx) ou vers les récepteurs (210Rx, 220Rx) encadrant ce dernier, par le corps d'un individu ou par une substance frauduleuse porté par cet individu,
- détection de la présence d'un double écho d'ondes micro-ondes réfléchi par une substance frauduleuse et par le corps d'un individu,
- comparaison des ondes micro-ondes transmises directement avec une valeur de référence de transmission dans le vide et transmission d'une alarme en cas de détection de retard supérieur à un seuil et avec une amplitude correspondant à une gamme de substances qui retarde et atténue les micro-ondes,
- comparaison des ondes micro-ondes transmises directement avec des micro-ondes transmises sur des transducteurs adjacents et génération d'une alarme en cas d'écart supérieur à un seuil détecté entre les différents signaux,
- comparaison des ondes micro-ondes obliques avec une valeur de référence dans le vide et génération d'une alarme en cas de détection de retard supérieur à un seuil et avec une amplitude correspondant à une gamme prédéterminée représentative de substances qui retardent et atténuent les micro-ondes,
- comparaison des ondes micro-ondes transmises en oblique avec les ondes micro-ondes transmises directement adjacentes et génération d'une alarme en cas d'écart supérieur à un seuil détecté entre les différents signaux,
- comparaison d'un double écho détecté avec des valeurs de transmission dans le vide et génération d'une alarme en cas de détection d'un retard supérieur à un seuil entre les pics des deux échos avec une amplitude supérieur à un seuil
- analyse de la chronologie d'évolution des signaux sur un même transducteur récepteur (210, 220), des dissymétries entre les signaux reçus sur des transducteurs récepteurs (210, 220) avant et respectivement arrière, ainsi que des dissymétries entre les signaux reçus sur des transducteurs récepteurs (210, 220) droits et respectivement gauches.

13. Dispositif selon l'une des revendications 1 à 12, dans lequel les moyens d'analyse (40) sont adaptés pour opérer au moins l'une des fonctions suivantes :
- mesure de la hauteur du corps d'un individu passant dans le canal (30) qui correspond à une réflexion d'onde micro-onde,
- déterminer la position d'un individu passant dans le canal, entre l'entrée et la sortie du canal, par analyse des signaux issus des transducteurs récepteurs micro-ondes,
- mesure des modifications de champs inductifs dues à des substances métalliques portées par un individu passant dans le canal,
- affichage de la hauteur et du côté droit ou gauche du canal sur lequel un objet métallique et un objet diélectrique sont détectés en corrélation,
- affichage de la silhouette type avant et arrière de l'individu passant dans le canal, dimensionnée en taille sur la base d'une mesure effectuée par détection de réflexion de faisceaux micro-ondes avec positionnement et indication de la nature des objets métalliques et des objets diélectriques non métalliques détectés.

14. Dispositif selon l'une des revendications 1 à 13, dans lequel les bobinages (110, 120) répartis dans les deux colonnes (10, 20), adaptés pour émettre un champ magnétique de détection et adaptés pour détecter les perturbations du champ magnétique de détection induites lors du passage d'un individu par le canal entre les deux colonnes génèrent des champs inductifs dans la gamme de fréquences comprise entre 70Hz et 30kHz.

15. Dispositif selon l'une des revendications 1 à 14, dans lequel la hauteur des colonnes (10, 20) est comprise entre 150 et 200cm.

16. Dispositif selon l'une des revendications 1 à 15, comprenant une série verticale de transducteurs micro-ondes (210, 220) superposés verticalement sur chaque colonne (10, 20).

17. Dispositif selon l'une des revendications 1 à 15, comprenant deux séries verticales de transducteurs micro-ondes (210, 220) superposés verticalement sur chaque colonne (10, 20).

18. Dispositif selon la revendication 17, dans lequel la distance horizontale entre deux transducteurs (210, 220) situés dans une même colonne est comprise entre 10 et 30cm.

19. Procédé de détection d'objets ou matières non autorisés portés par un individu dans une zone à accès protégé, **caractérisé en ce qu'**il comporte les étapes qui consistent à analyser les signaux issus des bobinages récepteurs (110, 120) pour détecter la présence d'objet métallique porté par un individu transitant par ledit canal formé entre les deux colonnes (10, 20), analyser des signaux issus de récepteurs micro-ondes (210Rx, 220Rx) correspondant aux signaux transmis à partir d'une colonne jusqu'à la colonne en regard et aux signaux réfléchis à partir d'une colonne vers cette même colonne pour détecter la présence de matériau diélectrique porté par l'individu transitant par ledit canal et établir les corrélations spatiales existant entre les objets métalliques et les matériaux diélectriques détectés.

20. Procédé selon la revendication 19, ledit procédé mettant en œuvre au moins une des étapes suivantes :
- mesure du retard et de l'amplitude d'une transmission directe de micro-ondes entre chaque paire d'émetteurs (210Tx, 220TX) et récepteur (210Rx, 220Rx) coaxiaux situés sur les deux colonnes opposées (10, 20),
- mesure du retard et de l'amplitude d'une transmission oblique de micro-ondes entre chaque émetteur (210Tx, 220TX) situé sur une colonne (10, 20) et les récepteurs (210Rx, 220Rx) qui encadrent le récepteur situé sur la colonne opposée coaxial de l'émetteur,
- mesure du retard et de l'amplitude de l'onde micro-ondes émise par chaque transducteur émetteur (210Tx, 220TX) et réfléchie vers le même transducteur formant récepteur (210Rx, 220Rx) ou vers les récepteurs (210Rx, 220Rx) encadrant ce dernier, par le corps d'un individu ou par une substance frauduleuse porté par cet individu,
- détection de la présence d'un double écho d'ondes micro-ondes réfléchi par une substance frauduleuse et par le corps d'un individu,
- comparaison des ondes micro-ondes transmises directement avec une valeur de référence de transmission dans le vide et transmission d'une alarme en cas de détection de retard supérieur à un seuil et avec une amplitude correspondant à une gamme de substances qui retarde et atténue les micro-ondes,
- comparaison des ondes micro-ondes transmises directement avec des micro-ondes transmises sur des transducteurs adjacents et génération d'une alarme en cas d'écart supérieur à un seuil détecté entre les différents signaux,
- comparaison des ondes micro-ondes obliques avec une valeur de référence dans le vide et génération d'une alarme en cas de détection de retard supérieur à un seuil et avec une amplitude correspondant à une gamme prédéterminée représentative de substances qui retardent et atténuent les micro-ondes,
- comparaison des ondes micro-ondes transmises en oblique avec les ondes micro-ondes transmises directement adjacentes et génération d'une alarme en cas d'écart supérieur à un seuil détecté entre les différents signaux,
- comparaison d'un double écho détecté avec des valeurs de transmission dans le vide et génération d'une alarme en cas de détection d'un retard supérieur à un seuil entre les pics des deux échos avec une amplitude supérieur à un seuil,
- analyse de la chronologie d'évolution des signaux sur un même transducteur récepteur (210, 220), des dissymétries entre les signaux reçus sur des transducteurs récepteurs (210, 220) avant et respectivement arrière, ainsi que des dissymétries entre les signaux reçus sur des transducteurs récepteurs (210, 220) droits et respectivement gauches,
- mesure de la hauteur du corps d'un individu passant dans le canal (30) qui correspond à une réflexion d'onde micro-onde,
- déterminer la position d'un individu passant dans le canal, entre l'entrée et la sortie du canal, par analyse des signaux issus des transducteurs récepteurs micro-ondes,
- mesure des modifications de champs inductifs dues à des substances métalliques portées par un individu passant dans le canal,
- affichage de la hauteur et du côté droit ou gauche du canal sur lequel un objet métallique et un objet diélectrique sont détectés en corrélation,
- affichage de la silhouette type avant et arrière de l'individu passant dans le canal, dimensionnée en taille sur la base d'une mesure effectuée par détection de réflexion de faisceaux micro-ondes avec positionnement et indication de la nature des objets métalliques et des objets diélectriques non métalliques détectés.

## Patentansprüche

1. Vorrichtung, die zur Detektion von nicht erlaubten Gegenständen oder Substanzen, die von einer Person in eine Zone mit geschütztem Zugang gebracht werden, bestimmt ist, Folgendes beinhaltend:
- mindestens zwei Säulen (10, 20), die zwischen sich einen Kanal (30) definieren, den die zu kontrollierenden Personen durchqueren können,
- Spulen (110, 120), die in den beiden Säulen (10, 20) verteilt sind, angepasst, um ein Detektionsmagnetfeld auszugeben, und angepasst, um die Störungen des Detektionsmagnetfelds zu detektieren, die beim Durchgang einer Person durch den Kanal zwischen den beiden Säulen induziert werden,
- Mikrowellen-Sende-/Empfangsmittel (210, 220), die in den beiden Säulen (10, 20) angeordnet sind, und wobei die Vorrichtung **dadurch gekennzeichnet ist, dass** sie umfasst
- Analysemittel (40), angepasst, um die aus den Empfangsspulen (110, 120) stammenden Signale zu analysieren, um die Präsenz eines metallischen Gegenstands, der von einer Person getragen wird, die den Kanal durchqueren, der zwischen den beiden Säulen (10, 20) gebildet wird, um aus Mikrowellenempfängern (210Rx, 220Rx) stammende Signale zu analysieren, die den Mikrowellensignalen, die aus einer Säule bis zu einer gegenüberliegenden Säule übertragen werden, und den Mikrowellensignalen, die aus einer Säule zu dieser selben Säule reflektiert werden, entsprechen, um die Präsenz eines dielektrischen Materials, das von der Person getragen wird, die den Kanal durchquert, zu detektieren, und um die räumlichen Zusammenhänge, die zwischen den metallischen Gegenständen und den detektierten dielektrischen Materialien bestehen, nachzuweisen.

2. Vorrichtung nach Anspruch 1, wobei die Analysemittel (40) durch Analysieren der Verzögerung und der Amplitude der empfangenen Mikrowellensignale in Bezug auf eine Bezugsgröße vorgehen.

3. Vorrichtung nach einem der Ansprüche 1 oder 2, wobei die Analysemittel (40) durch Vergleichen der in einem Empfänger empfangenen Mikrowellensignale mit den repräsentativen Bezugsgrößensignalen der Übertragung ins Leere und/oder der Reflexion auf einem Körper vorgehen.

4. Vorrichtung nach einem der Ansprüche 1 bis 3, wobei die Analysemittel (40) im Falle einer Detektion einer Abweichung größer als eine Schwelle zwischen den empfangenen Mikrowellensignalen und einer Bezugsgröße einen Alarm generieren.

5. Vorrichtung nach einem der Ansprüche 1 bis 4, wobei die Mikrowellen-Sende-/Empfangsmittel (210, 220) mehrere Mikrowellenumformer umfassen, die vertikal in jeder Säule (10, 20) verteilt sind.

6. Vorrichtung nach Anspruch 5, wobei die vertikale Abweichung zwischen zwei benachbarten Mikrowellen-Sende- /Empfangsmitteln (210, 220) zwischen 2 und 10 cm liegt.

7. Vorrichtung nach einem der Ansprüche 1 bis 6, wobei die Mikrowellenumformer (210, 220) in einem Frequenzbereich betrieben werden, der zwischen 5 und 90 GHz liegt.

8. Vorrichtung nach einem der Ansprüche 1 bis 7, wobei verschiedene Mikrowellenumformer (210, 220), die in einer Säule (10) gelegen sind, jeweils koaxial zu einem Umformer gelegen sind, der gegenüber in der gegenüberliegenden Säule (20) gelegen ist.

9. Vorrichtung nach einem der Ansprüche 1 bis 8, wobei jeder Mikrowellenumformer (210, 220) angepasst ist, um abwechselnd als Sender oder als Empfänger oder als Sender und Empfänger zu arbeiten.

10. Vorrichtung nach einem der Ansprüche 1 bis 9, wobei jeder Mikrowellensender (210Tx, 220Tx) angepasst ist, um in Richtung eines koaxialen Mikrowellenempfängers (210Rx, 220Rx) in der gegenüberliegenden Säule, sowie in Richtung der Umformer benachbart zu diesem gegenüberliegenden koaxialen Umformer zu senden.

11. Vorrichtung nach einem der Ansprüche 1 bis 10, wobei jeder Empfänger (210Rx, 220Rx) angepasst ist, um von einem koaxialen Sender (210Tx, 220Tx), der in der gegenüberliegenden Säule gelegen ist, sowie von den Umformern benachbart zu diesem gegenüberliegenden koaxialen Umformer zu empfangen.

12. Vorrichtung nach einem der Ansprüche 1 bis 11, wobei die Analysemittel (40) angepasst sind, um mindestens eine der folgenden Funktionen auszuführen:
- Messen der Verzögerung und der Amplitude einer direkten Übertragung von Mikrowellen zwischen jedem Paar von koaxialen Sendern (210Tx, 220Tx) und Empfänger (210Rx, 220Rx), die in den beiden gegenüberliegenden Säulen (10, 20) gelegen sind,
- Messen der Verzögerung und der Amplitude einer schrägen Übertragung von Mikrowellen zwischen jedem Sender (210Tx, 220Tx), der in einer Säule (10, 20) gelegen ist, und den Empfängern (210Rx, 220Rx), die den koaxialen Empfänger einrahmen, der in der gegenüberliegenden Säule des Senders gelegen ist,
- Messen der Verzögerung und der Amplitude der Mikrowellenwelle, die von jedem Senderumfomer (210Tx, 220Tx) ausgesendet wird, und zu demselben Empfänger bildenden Umformer (210Rx, 220Rx) oder zu den Empfängern (210Rx, 220Rx), die diesen letzteren einrahmen, durch den Körper einer Person oder durch eine betrügerische Substanz, die von dieser Person getragen wird, reflektiert wird,
- Detektieren der Präsenz eines doppelten Echos von Mikrowellenwellen, das durch eine betrügerische Substanz und durch den Körper einer Person reflektiert wird,
- Vergleichen der Mikrowellenwellen, die direkt mit einem Übertragungs-Bezugsgrößenwert ins Leere übertragen werden, und Übertragen eines Alarms im Falle einer Detektion einer Verzögerung größer als eine Schwelle und mit einer Amplitude entsprechend einer Palette an Substanzen, die die Mikrowellen verzögert und abschwächt,
- Vergleichen der Mikrowellenwellen, die direkt übertragen werden, mit Mikrowellen, die in benachbarten Umformern übertragen werden, und Generieren eines Alarms im Falle einer Abweichung größer als eine zwischen den verschiedenen Signalen detektierten Schwelle,
- Vergleichen der schrägen Mikrowellenwellen mit einem Bezugsgrößenwert im Leeren und Generieren eines Alarms im Falle einer Detektion einer Verzögerung größer als eine Schwelle, und mit einer Amplitude entsprechend einer repräsentativen vorbestimmten Palette an Substanzen, die die Mikrowellen verzögern und abschwächen,
- Vergleichen der schräg übertragenen Mikrowellenwellen mit den direkt übertragenen benachbarten Mikrowellenwellen, und Generieren eines Alarms im Falle einer Abweichung größer als eine zwischen den verschiedenen Signalen detektierte Schwelle,
- Vergleichen eines detektierten Doppelechos mit den Übertragungswerten ins Leere und Generieren eines Alarms im Falle einer Detektion einer Verzögerung größer als eine Schwelle zwischen den Spitzen der beiden Echos mit einer Amplitude größer als eine Schwelle
- Analysieren der Entwicklungschronologie der Signale in einem selben Empfängerumformer (210, 220), der Asymmetrien zwischen den in dem vorderen beziehungsweise hinteren Empfängerumformer (210, 220) empfangenen Signalen, sowie der Asymmetrien zwischen den in dem rechten beziehungsweise linken Empfängerumformer (210, 220) empfangenen Signalen.

13. Vorrichtung nach einem der Ansprüche 1 bis 12, wobei die Analysemittel (40) angepasst sind, um mindestens eine der folgenden Funktionen auszuführen:
- Messen der Höhe des Körpers einer Person, die durch den Kanal (30) läuft, entsprechend einer Reflexion einer Mikrowellenwell,
- Bestimmen der Position einer Person, die durch den Kanal läuft, zwischen dem Eingang und dem Ausgang des Kanals, durch Analyse der aus den Mikrowellen-Empfänger-Umformern stammenden Signale,
- Messen der Änderungen induktiver Felder aufgrund metallischer Substanzen, die durch eine Person getragen werden, die durch den Kanal läuft,
- Anzeigen der Höhe und der rechten oder linken Seite des Kanals, in dem ein metallischer Gegenstand und ein dielektrischer Gegenstand im Zusammenhang detektiert werden,
- Anzeige der vorderen und hinteren Beispielsilhouette der Person, die durch den Kanal läuft, in der Größe auf Grundlage einer Messung bemessen, die durch Detektion einer Reflexion von Mikrowellenstrahlenbündeln ausgeführt wird, mit Positionierung und Angabe der Art der detektierten metallischen Gegenstände und der nicht metallischen dielektrischen Gegenstände.

14. Vorrichtung nach einem der Ansprüche 1 bis 13, wobei die in den beiden Säulen (10, 20) verteilten Spulen (110, 120) angepasst sind, um ein Detektionsmagnetfeld auszusenden, und angepasst sind, um Störungen des Detektionsmagnetfelds zu detektieren, die beim Durchlaufen einer Person durch den Kanal zwischen den beiden Säulen induziert werden, induktive Felder im Frequenzbereich generieren, der zwischen 70 Hz und 30 kHz liegt.

15. Vorrichtung nach einem der Ansprüche 1 bis 14, wobei die Höhe der Säulen (10, 20) zwischen 150 und 200cm liegt.

16. Vorrichtung nach einem der Ansprüche 1 bis 15, eine vertikale Reihe von Mikrowellenumformern (210, 220) umfassend, die vertikal in der Säule (10, 20) überlagert sind.

17. Vorrichtung nach einem der Ansprüche 1 bis 15, zwei vertikale Reihen von Mikrowellenumformern (210, 220) umfassend, die vertikal in der Säule (10, 20) überlagert sind.

18. Vorrichtung nach Anspruch 17, wobei der horizontale Abstand zwischen zwei Umformern (210, 220), die in einer selben Säule gelegen ist, zwischen 10 und 30 cm liegt.

19. Verfahren zur Detektion von nicht erlaubten Gegenständen oder Substanzen, die von einer Person in eine Zone mit geschütztem Zugang gebracht werden, das die Schritte beinhaltet, die darin bestehen, die aus den Empfängerspulen (110, 120) stammenden Signale zu analysieren, um die Präsenz eines metallischen Gegenstandes zu detektieren, der von einer Person getragen wird, die den Kanal durchquert, der zwischen den beiden (10, 20) gebildet wird, aus Mikrowellenempfängern (210Rx, 220Rx) stammenden Signale zu analysieren, die den Signalen, die aus einer Säule bis zur Säule gegenüber übertragen werden, und den Signalen entsprechen, die von einer Säule zu dieser selben Säule reflektiert werden, um die Präsenz eines dielektrischen Materials zu detektieren, das von der Person getragen wird, die den Kanal durchquert, und räumliche Zusammenhänge nachzuweisen, die zwischen den metallischen Gegenständen und den detektierten dielektrischen Materialien bestehen.

20. Verfahren nach Anspruch 19, das mindestens einen der folgenden Schritte umsetzt:
- Messen der Verzögerung und der Amplitude einer direkten Übertragung von Mikrowellen zwischen jedem Paar von koaxialen Sendern (210Tx, 220Tx) und Empfänger (210Rx, 220Rx), die in den beiden gegenüberliegenden Säulen (10, 20) gelegen sind,
- Messen der Verzögerung und der Amplitude einer schrägen Übertragung von Mikrowellen zwischen jedem Sender (210Tx, 220Tx), der in einer Säule (10, 20) gelegen ist, und den Empfängern (210Rx, 220Rx), die den Empfänger einrahmen, der in der gegenüberliegenden Säule koaxial zum Sender gelegen ist,
- Messen der Verzögerung und der Amplitude der Mikrowellenwelle, die von jedem Senderumformer (210Tx, 220Tx) ausgesendet wird, und zu demselben Empfänger bildenden Umformer (210Rx, 220Rx) oder zu den Empfängern (210Rx, 220Rx), die diesen letzteren einrahmen, durch den Körper einer Person oder durch eine betrügerische Substanz, die von dieser Person getragen wird, reflektiert wird,
- Detektieren der Präsenz eines doppelten Echos von Mikrowellenwellen, das durch eine betrügerische Substanz und durch den Körper einer Person reflektiert wird,
- Vergleichen der Mikrowellenwellen, die direkt übertragen werden, mit einem Übertragungs-Bezugsgrößenwert ins Leere und Übertragen eines Alarms im Falle einer Detektion einer Verzögerung größer als eine Schwelle und mit einer Amplitude entsprechend einer Palette an Substanzen, die die Mikrowellen verzögert und abschwächt,
- Vergleichen der Mikrowellenwellen, die direkt übertragen werden, mit Mikrowellen, die in benachbarten Umformern übertragen werden, und Generieren eines Alarms im Falle einer Abweichung größer als eine zwischen den verschiedenen Signalen detektierten Schwelle,
- Vergleichen der schrägen Mikrowellenwellen mit einem Bezugsgrößenwert ins Leere und Generieren eines Alarms im Falle einer Detektion einer Verzögerung größer als eine Schwelle, und mit einer Amplitude entsprechend einer repräsentativen vorbestimmten Palette an Substanzen, die die Mikrowellen verzögern und abschwächen,
- Vergleichen der schräg übertragenen Mikrowellen mit den direkt übertragenen benachbarten Mikrowellen, und Generieren eines Alarms im Falle einer Abweichung größer als eine zwischen den verschiedenen Signalen detektierten Schwelle,
- Vergleichen eines detektierten doppelten Echos mit den Übertragungswerten ins Leere und Generieren eines Alarms im Falle einer Detektion einer Verzögerung größer als eine Schwelle zwischen den Spitzen der beiden Echos mit einer Amplitude größer als eine Schwelle,
- Analysieren der Entwicklungschronologie der Signale in einem selben Empfängerumformer (210, 220), der Asymmetrien zwischen den in dem vorderen beziehungsweise hinteren Empfängerumformer (210, 220) empfangenen Signalen, sowie der Asymmetrien zwischen den in dem rechten beziehungsweise linken Empfängerumformer (210, 220) empfangenen Signalen,
- Messen der Höhe des Körpers einer Person, die durch den Kanal (30) läuft, entsprechend einer Reflexion einer Mikrowellenwelle,
- Bestimmen der Position einer Person, die durch den Kanal läuft, zwischen dem Eingang und dem Ausgang des Kanals, durch Analyse der aus den Mikrowellen-Empfänger-Umformern stammenden Signale,
- Messen der Änderungen induktiver Felder aufgrund metallischer Substanzen, die durch eine Person getragen werden, die durch den Kanal läuft,
- Anzeigen der Höhe und der rechten oder linken Seite des Kanals, in dem ein metallischer Gegenstand und ein dielektrischer Gegenstand im Zusammenhang detektiert werden,
- Anzeigen der vorderen und hinteren Beispielsilhouette der Person, die durch den Kanal läuft, in der Größe auf Grundlage einer Messung bemessen, die durch Detektion einer Reflexion von Mikrowellenstrahlenbündeln ausgeführt wird, mit Positionierung und Angabe der Art der detektierten metallischen Gegenstände und der nicht metallischen dielektrischen Gegenstände.

## Claims

1. A device intended for detection of non-authorised objects or substances carried by an individual in a protected access zone, including:
- at least two columns (10, 20) together defining a channel (30) by which individuals to be checked can transit,
- windings (110, 120) distributed in the two columns (10, 20), adapted to emit a detection magnetic field and adapted to detect the perturbations of the detection magnetic field caused when an individual crosses the channel between the two columns,
- microwave sender/receiver means (210, 220) arranged in the two columns (10, 20), and **characterized in that** it comprises:
- analysis means (40) adapted to analyse the signals from the receiver windings (110, 120) to detect the presence of a metallic object carried by an individual transiting via said channel formed between the two columns (10, 20), to analyse signals from microwave receivers (210Rx, 220Rx) corresponding to the microwave signals transmitted from one column into the opposite column and to the microwave signals reflected from one column towards this same column to detect the presence of dielectric material carried by the individual transiting via said channel and to set up the spatial correlations existing between the detected metallic objects and dielectric materials.

2. The device according to claim 1, wherein the analysis means (40) perform analysis of the delay and the amplitude of the microwave signals received relative to a reference.

3. The device according to one of claims 1 or 2, wherein the analysis means (40) perform comparison of the microwave signals received on a receiver with reference signals representative of the transmission in the void and/or reflection on a body.

4. The device according to one of claims 1 to 3, wherein the analysis means (40) generate an alarm in case of detection of a gap greater than a threshold between the microwave signals received and a reference.

5. The device according to one of claims 1 to 4, wherein the microwave sender/receiver means (210, 220) comprise several microwave transducers distributed vertically on each column (10, 20).

6. The device according to claim 5, wherein the vertical gap between two adjacent microwave sender/receivers (210, 220) is comprised between 2 and 10 cm.

7. The device according to one of claims 1 to 6, wherein the microwave transducers (210, 220) operate in a range of frequencies comprised between 5 and 90 GHz.

8. The device according to one of claims 1 to 7, wherein the different microwave transducers (210, 220) located on a column (10) are located respectively coaxially to a transducer located opposite on the opposite column (20).

9. The device according to one of claims 1 to 8, wherein each microwave transducer (210, 220) is adapted to work alternatively as sender or as receiver or as sender and receiver.

10. The device according to one of claims 1 to 9, wherein each microwave sender (210Tx, 220Tx) is adapted to emit in the direction of a coaxial microwave receiver (210Rx, 220Rx) on the opposite column, as well as in the direction of transducers adjacent to this opposite coaxial transducer.

11. The device according to one of claims 1 to 10, wherein each receiver (210Rx, 220Rx) is adapted to receive from a coaxial sender (210Tx, 220Tx) located on the opposite column, as well as from the transducers adjacent to this opposite coaxial sender transducer.

12. The device according to one of claims 1 to 11, wherein the analysis means (40) are adapted to perform at least one of the following functions:
- measuring the delay and the amplitude of a direct transmission of microwaves between each pair of coaxial senders (210Tx, 220TX) and receivers (210Rx, 220Rx) located on the two opposite columns (10, 20),
- measuring the delay and the amplitude of an oblique transmission of microwaves between each sender (210Tx, 220TX) located on a column (10, 20) and the receivers (210Rx, 220Rx) which frame the receiver located on the opposite column coaxial of the sender,
- measuring the delay and the amplitude of the microwave wave emitted by each sender transducer (210Tx, 220TX) and reflected towards the same transducer forming a receiver (210Rx, 220Rx) or towards the receivers (210Rx, 220Rx) framing the latter, by the body of an individual or by a fraudulent substance carried by this individual,
- detection of the presence of a double echo of microwave waves reflected by a fraudulent substance and by the body of an individual,
- comparison of the microwave waves transmitted directly with a transmission reference value in the void and transmission of an alarm in case of detection of delay greater than a threshold and with an amplitude corresponding to a range of substances which delays and attenuates the microwaves,
- comparison of the microwave waves transmitted directly with microwaves transmitted on adjacent transducers and generation of an alarm in case of a gap greater than a threshold detected between the different signals,
- comparison of the oblique microwave waves with a reference value in the void and generation of an alarm in case of detection of delay greater than a threshold and with an amplitude corresponding to a predetermined range representative of substances which delay and attenuate the microwaves,
- comparison of the microwave waves transmitted obliquely with the adjacent microwave waves transmitted directly and generation of an alarm in case of a gap greater than a threshold detected between the different signals,
- comparison of a double echo detected with transmission values in the void and generation of an alarm in case of detection of a delay greater than a threshold between the peaks of the two echoes with an amplitude greater than a threshold
- analysis of the evolution chronology of the signals on the same receiver transducer (210, 220), the dissymmetries between the signals received on front and rear receiver transducers (210, 220) respectively, as well as dissymmetries between the signals received on right and left receiver transducers (210, 220) respectively.

13. The device according to one of claims 1 to 12, wherein the analysis means (40) are adapted to perform at least one of the following functions:
- measuring the height of the body of an individual crossing the channel (30) which corresponds to a reflection of microwave wave,
- determining the position of an individual crossing the channel, between the entrance and the exit of the channel, by analysis of the signals from the microwave receiver transducers,
- measuring the modifications of inductive fields due to metallic substances carried by an individual crossing the channel,
- displaying the height and the right or left side of the channel on which a metallic object and a dielectric object are detected in correlation,
- displaying the front and rear type silhouette of the individual crossing the channel, dimensioned in size on the basis of a measurement made by detection of reflection of microwave beams with positioning and indication of the nature of the detected metallic objects and non-metallic dielectric objects.

14. The device according to one of claims 1 to 13, wherein the windings (110, 120) distributed in the two columns (10, 20), adapted to emit a detection magnetic field and adapted to detect the perturbations of the detection magnetic field caused when an individual crosses the channel between the two columns generate inductive fields in the range of frequencies comprised between 70 Hz and 30 kHz.

15. The device according to one of claims 1 to 14, wherein the height of the columns (10, 20) is comprised between 150 and 200 cm.

16. The device according to one of claims 1 to 15, comprising a vertical series of microwave transducers (210, 220) superimposed vertically on each column (10, 20).

17. The device according to one of claims 1 to 15, comprising two vertical series of microwave transducers (210, 220) superimposed vertically on each column (10, 20).

18. The device according to claim 17, wherein the horizontal distance between two transducers (210, 220) located in the same column is comprised between 10 and 30 cm.

19. A process for detection of non-authorised objects or substances carried by an individual in a protected access zone, comprising the steps of analysing the signals from the receiver windings (110, 120) to detect the presence of a metallic object carried by an individual transiting via said channel formed between the two columns (10, 20), analysing the signals from microwave receivers (210Rx, 220Rx) corresponding to the signals transmitted from one column into the opposite column and to the signals reflected from one column towards this same column to detect the presence of dielectric material carried by the individual transiting via said channel and to set up the spatial correlations existing between the metallic objects and the detected dielectric materials.

20. The process according to claim 19, performing at least one of the following steps:
- measuring the delay and the amplitude of direct transmission of microwaves between each pair of coaxial senders (210Tx, 220TX) and receivers (210Rx, 220Rx) located on the two opposite columns (10, 20),
- measuring the delay and the amplitude of oblique transmission of microwaves between each sender (210Tx, 220TX) located on a column (10, 20) and the receivers (210Rx, 220Rx) which frame the receiver located on the opposite column coaxial of the sender,
- measuring the delay and the amplitude of the microwave wave emitted by each sender transducer (210Tx, 220TX) and reflected towards the same transducer forming a receiver (210Rx, 220Rx) or towards the receivers (210Rx, 220Rx) framing the latter, by the body of an individual or by a fraudulent substance carried by this individual,
- detection of the presence of a double echo of microwave waves reflected by a fraudulent substance and by the body of an individual,
- comparison of the microwave waves transmitted directly with a transmission reference value in the void and transmission of an alarm in case of detection of delay greater than a threshold and with an amplitude corresponding to a range of substances which delays and attenuates the microwaves,
- comparison of the microwave waves transmitted directly with microwaves transmitted on adjacent transducers and generation of an alarm in case of a gap greater than a threshold detected between the different signals,
- comparison of the oblique microwave waves with a reference value in the void and generation of an alarm in case of detection of delay greater than a threshold and with an amplitude corresponding to a predetermined range representative of substances which delay and attenuate the microwaves,
- comparison of the microwave waves transmitted obliquely with the adjacent microwave waves transmitted directly and generation of an alarm in case of a gap greater than a threshold detected between the different signals,
- comparison of a double echo detected with transmission values in the void and generation of an alarm in case of detection of a delay greater than a threshold between the peaks of the two echoes with an amplitude greater than a threshold,
- analysis of the evolution chronology of the signals on the same receiver transducer (210, 220), dissymmetries between the signals received on front and rear receiver transducers (210, 220) respectively, as well as dissymmetries between the signals received on right and left receiver transducers (210, 220) respectively,
- measuring the height of the body of an individual crossing the channel (30) which corresponds to reflection of microwave wave,
- determining the position of an individual crossing the channel, between the entrance and the exit of the channel, by analysis of the signals from the microwave receiver transducers,
- measuring the modifications of inductive fields due to metallic substances carried by an individual crossing the channel,
- displaying the height and the right or left side of the channel on which a metallic object and a dielectric object are detected in correlation,
- displaying the front and rear type silhouette of the individual crossing the channel, dimensioned in size on the basis of a measurement made by detection of reflection of microwave beams with positioning and indication of the nature of the detected metallic objects and non-metallic dielectric objects.
